(19) Europäisches Patentamt
European Patent Office
Office européen des brevets

(11) **EP 3 572 834 A1**

(12) **EUROPEAN PATENT APPLICATION**

(43) Date of publication:
**27.11.2019 Bulletin 2019/48**

(51) Int Cl.:
**G01S 7/486** (2006.01)   **G01S 7/491** (2006.01)
**G01S 17/10** (2006.01)   **G01S 17/89** (2006.01)

(21) Application number: **19171437.7**

(22) Date of filing: **26.04.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.04.2018   JP 2018087512**

(71) Applicant: **Sony Semiconductor Solutions Corporation**
**Atsugi-shi, Kanagawa 243-0014 (JP)**

(72) Inventors:
• **AOTAKE, Shuntaro**
  **Kanagawa, 243-0014 (JP)**
• **MASUNO, Tomonori**
  **Kanagawa, 243-0014 (JP)**
• **KAMIYA, Takuro**
  **Kanagawa, 243-0014 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **DISTANCE MEASUREMENT PROCESSING APPARATUS, DISTANCE MEASUREMENT MODULE, DISTANCE MEASUREMENT PROCESSING METHOD, AND PROGRAM**

(57)   There is provided a distance measurement processing apparatus including: a correction parameter calculating section configured to calculate a correction parameter for correcting deviation of characteristics between a first tap and a second tap using a predetermined number of detection signals which are detected two each for two or more types of irradiated light, two or more types of the irradiated light with a predetermined phase difference being radiated on an object, and electric charges generated by reflected light reflected by the object being received being sorted into the first tap and the second tap in accordance with a distance to the object; and a distance measuring section configured to obtain a depth indicating a distance to the object on the basis of the correction parameter and a predetermined number of the detection signals.

FIG. 1

**Description**

CROSS REFERENCE TO RELATED APPLICATIONS

This application claims the benefit of Japanese Priority Patent Application JP 2018-087512 filed April 27, 2018.

BACKGROUND

The present disclosure relates to a distance measurement processing apparatus, a distance measurement module, a distance measurement processing method, and a program, and, particularly, relates to a distance measurement processing apparatus, a distance measurement module, a distance measurement processing method, and a program which enable achievement of higher performance.

In recent years, in accordance with progress of a semiconductor technology, a distance measurement module which measures a distance to an object has become smaller. By this means, for example, it becomes possible to mount a distance measurement module to a mobile terminal such as a so-called smartphone, which is a small information processing apparatus having a communication function.

Typically, there are two types in a distance measurement method in a distance measurement module: an Indirect TOF (Time of Flight) scheme, and a Structured Light scheme. In the Indirect ToF scheme, light is radiated toward an object, light reflected on a surface of the object is detected, and a distance to the object is calculated on the basis of a measurement value obtained by measuring time of flight of the light. In the Structured Light scheme, structured light is radiated toward an object, a distance to the object is calculated on the basis of an image obtained by imaging distortion of a structure on a surface of the object.

For example, JP 2017-150893A discloses a technology of accurately measuring a distance by determining movement of an object within a detection period in a distance measurement system in which a distance is measured using a ToF scheme.

SUMMARY

By the way, as described above, in the case where a distance measurement module is utilized at a mobile terminal, it is desired to improve performance of a frame rate, power consumption, a data transferring band, or the like.

It is desirable to enable achievement of higher performance.

The embodiments described below in more detail disclose a distance measurement processing apparatus, a distance measurement module, a distance measurement processing method, and a respective program as defined in the appended claims.

According to an embodiment of the present disclosure, there is provided a distance measurement processing apparatus including: a correction parameter calculating section configured to calculate a correction parameter for correcting deviation of characteristics between a first tap and a second tap using a predetermined number of detection signals which are detected two each for two or more types of irradiated light, two or more types of the irradiated light with a predetermined phase difference being radiated on an object, and electric charges generated by reflected light reflected by the object being received being sorted into the first tap and the second tap in accordance with a distance to the object; and a distance measuring section configured to obtain a depth indicating a distance to the object on the basis of the correction parameter and a predetermined number of the detection signals.

According to an embodiment of the present disclosure, there is provided a distance measurement module including: a light emitting section configured to radiate two or more types of irradiated light with a predetermined phase difference to an object; a light receiving section configured to output a predetermined number of detection signals which are detected two each for two or more types of the irradiated light, electric charges generated by reflected light reflected by the object being received being sorted into a first tap and a second tap in accordance with a distance to the object; a correction parameter calculating section configured to calculate a correction parameter for correcting deviation of characteristics between the first tap and the second tap using a predetermined number of the detection signals; and a distance measuring section configured to obtain a depth indicating a distance to the object on the basis of the correction parameter and a predetermined number of the detection signals.

According to an embodiment of the present disclosure, there is provided a distance measurement processing method to be performed by a distance measurement processing apparatus which performs distance measurement processing, the distance measurement processing method including: calculating a correction parameter for correcting deviation of characteristics between a first tap and a second tap using a predetermined number of detection signals which are detected two each for two or more types of irradiated light, two or more types of the irradiated light with a predetermined phase difference being radiated on an object, and electric charges generated by reflected light reflected by the object being received being sorted into the first tap and the second tap in accordance with a distance to the object;

and obtaining a depth indicating a distance to the object on the basis of the correction parameter and a predetermined number of the detection signals.

According to an embodiment of the present disclosure, there is provided a program for causing a computer of a distance measurement processing apparatus which performs distance measurement processing to execute distance measurement processing including: calculating a correction parameter for correcting deviation of characteristics between a first tap and a second tap using a predetermined number of detection signals which are detected two each for two or more types of irradiated light, two or more types of the irradiated light with a predetermined phase difference being radiated on an object, and electric charges generated by reflected light reflected by the object being received being sorted into the first tap and the second tap in accordance with a distance to the object; and obtaining a depth indicating a distance to the object on the basis of the correction parameter and a predetermined number of the detection signals.

According to an embodiment of the present disclosure, two or more types of irradiated light having a predetermined phase difference are radiated on an object, electric charges generated by reflected light reflected by the object being received are sorted into a first tap and a second tap in accordance with a distance to the object, and a predetermined number of detection signals are detected two each for the two or more types of irradiated light. Then, a correction parameter for correcting deviation of characteristics between the first tap and the second tap is calculated using the predetermined number of detection signals, and a depth indicating a distance to the object is obtained on the basis of the correction parameter and the predetermined number of detection signals.

According to an embodiment of the present disclosure, it is possible to achieve higher performance.

The effects described in the specification are not limiting. That is, the present disclosure can exhibit any of the effects that are described in the present disclosure.

BRIEF DESCRIPTION OF THE DRAWINGS

Embodiments will now be described with reference to the accompanying drawings, in which:

FIG. 1 is a block diagram illustrating a configuration example of an embodiment of a distance measurement module to which the present technology is applied;
FIG. 2 is a diagram explaining sorting of electric charges at a pixel circuit;
FIG. 3 is a diagram illustrating an example of four types of irradiated light with phases delayed by 90 degrees each;
FIG. 4 is a diagram explaining distance measurement utilizing four detection periods by the four types of irradiated light with phases delayed by 90 degrees each;
FIG. 5 is a diagram illustrating an example of a detection signal in a detection period by irradiated light with a phase delayed by 0 degrees;
FIG. 6 is a diagram illustrating an example of a detection signal in a detection period by irradiated light with a phase delayed by 90 degrees;
FIG. 7 is a diagram illustrating an example of a detection signal in a detection period by irradiated light with a phase delayed by 180 degrees;
FIG. 8 is a diagram illustrating an example of a detection signal in a detection period by irradiated light with a phase delayed by 270 degrees;
FIG. 9 is a diagram explaining relationship between detection signals A0 to A270 and detection signals B0 to B270;
FIG. 10 is a diagram explaining correction operation;
FIG. 11 is a diagram explaining distance measurement utilizing two detection periods;
FIG. 12 is a block diagram illustrating a first configuration example of a distance measurement operation processing section;
FIG. 13 is a flowchart explaining a first processing example of distance measurement processing;
FIG. 14 is a block diagram illustrating a second configuration example of the distance measurement operation processing section;
FIG. 15 is a diagram explaining improvement of a frame rate by synthesis of distance measurement results;
FIG. 16 is a diagram explaining reduction of power consumption by synthesis of the distance measurement results;
FIG. 17 is a flowchart explaining a second processing example of the distance measurement operation processing;
FIG. 18 is a diagram illustrating an example of a timing for light emission and light reception for outputting one depth map;
FIG. 19 is a diagram illustrating variation of a light emission pattern;
FIG. 20 is a diagram illustrating variation of a light emission pattern;
FIG. 21 is a diagram illustrating variation of a light emission pattern;
FIG. 22 is a block diagram illustrating a third configuration example of the distance measurement operation processing section;
FIG. 23 is a diagram explaining synthesis of the distance measurement results based on motion detection;

FIG. 24 is a flowchart explaining a third processing example of the distance measurement operation processing;

FIG. 25 is a block diagram illustrating a configuration example of electronic equipment on which a distance measurement module is mounted;

FIG. 26 is a block diagram illustrating a configuration example of an embodiment of a computer to which the present technology is applied;

FIG. 27 is a block diagram depicting an example of schematic configuration of a vehicle control system; and

FIG. 28 is a diagram of assistance in explaining an example of installation positions of an outside-vehicle information detecting section and an imaging section.

DETAILED DESCRIPTION OF THE EMBODIMENT(S)

A specific embodiment to which the present technology is applied will be described below in detail with reference to the drawings.

<Configuration example of distance measurement module>

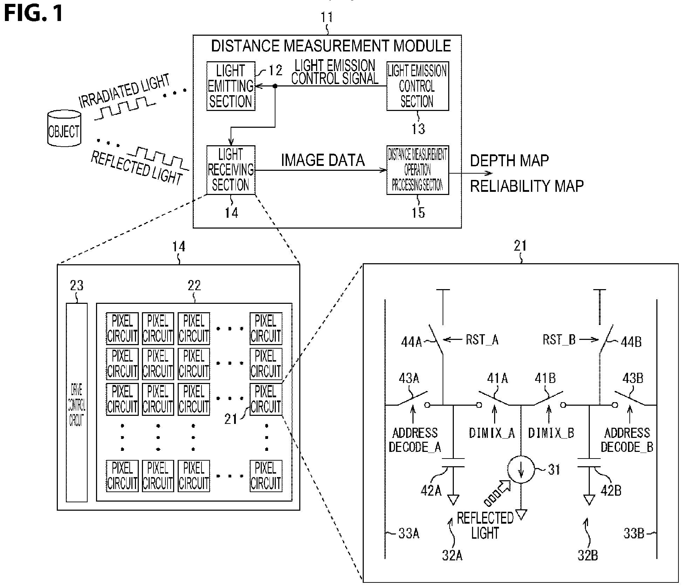

FIG. 1 is a block diagram illustrating a configuration example of an embodiment of a distance measurement module to which the present technology is applied.

As illustrated in FIG. 1, a distance measurement module 11 includes a light emitting section 12, a light emission control section 13, a light receiving section 14 and a distance measurement operation processing section 15. For example, the distance measurement module 11 radiates light to an object, receives light (reflected light) which is the light (irradiated light) reflected by the object, and measures a depth indicating a distance to the object.

The light emitting section 12 emits light while modulating the light at a timing in accordance with a light emission control signal supplied from the light emission control section 13 in accordance with control by the light emission control section 13, and radiates irradiated light to an object.

The light emission control section 13 supplies the light emission control signal of a predetermined frequency (such as, for example, 20 MHz) to the light emitting section 12 and controls light emission of the light emitting section 12. Further, the light emission control section 13 supplies the light emission control signal also to the light receiving section 14 to drive the light receiving section 14 in accordance with a timing of light emission at the light emitting section 12.

The light receiving section 14 receives reflected light from the object on a sensor surface in which a plurality of pixels is disposed in an array. The light receiving section 14 then supplies image data constituted with detection signals in accordance with light receiving amounts of the reflected light received by the respective pixels, to the distance measurement operation processing section 15.

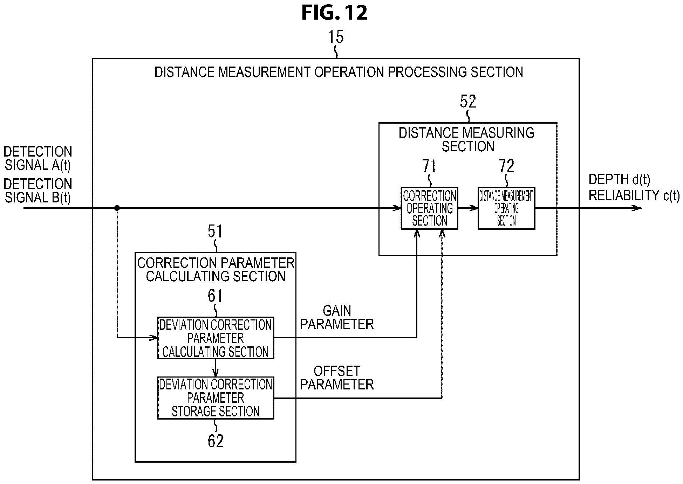

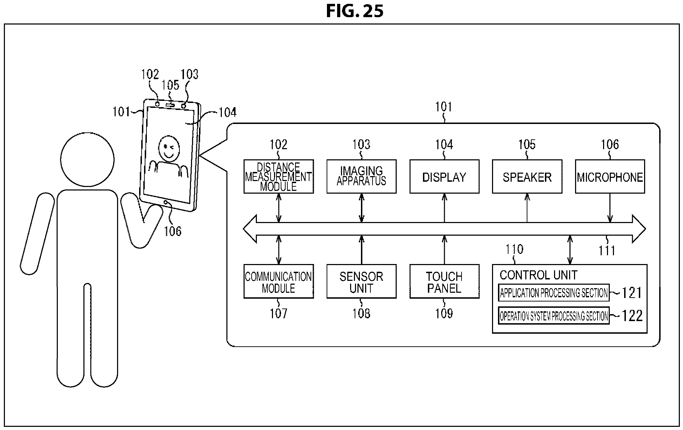

The distance measurement operation processing section 15 performs operation of obtaining a depth from the distance measurement module 11 to the object on the basis of the image data supplied from the light receiving section 14. The distance measurement operation processing section 15 then generates a depth map in which the depth to the object is indicated for each pixel, and a reliability map in which reliability for each depth is indicated for each pixel, and outputs the depth map and the reliability map to a subsequent control unit which is not illustrated (such as, for example, an application processing section 121 and an operation system processing section 122 in FIG. 25). Note that a detailed configuration of the distance measurement operation processing section 15 will be described later with reference to FIG. 12.

Further, at the light receiving section 14, a pixel array section 22 in which a plurality of pixel circuits 21 is disposed in an array, is provided, and a drive control circuit 23 is disposed in a peripheral region of the pixel array section 22. The pixel array section 22 is a sensor surface which receives reflected light. The drive control circuit 23, for example, outputs a control signal for controlling drive of the pixel circuit 21 (such as, for example, a sorting signal DIMIX, a selection signal ADDRESS DECODE and a reset signal RST which will be described later) on the basis of the light emission control signal supplied from the light emission control section 13.

The pixel circuit 21 is constituted so that the electric charges generated at one photodiode 31 are sorted into a tap 32A and a tap 32B. Then, among the electric charges generated at the photodiode 31, the electric charges sorted into the tap 32A are read out from a signal line 33A and used as a detection signal A, and the electric charges sorted into the tap 32B are read out from a signal line 33B and used as a detection signal B.

The tap 32A includes a transfer transistor 41A, a floating diffusion (FD) section 42A, a select transistor 43A and a reset transistor 44A. In a similar manner, the tap 32B includes a transfer transistor 41B, an FD section 42B, a select transistor 43B and a reset transistor 44B.

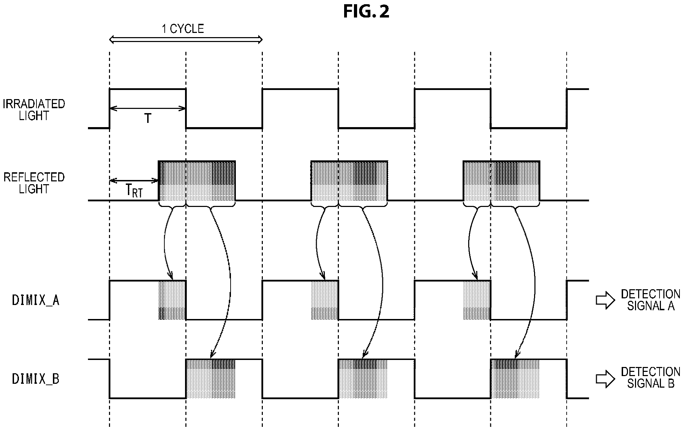

Sorting of the electric charges at the pixel circuit 21 will be described with reference to FIG. 2.

As illustrated in FIG. 2, irradiated light which is modulated (1 cycle = 2T) so that ON and OFF of irradiation are repeated in irradiation time T is output from the light emitting section 12, and reflected light is received at the photodiode 31 with a delay of delay time $T_{RT}$ in accordance with the distance to the object. Further, a sorting signal DIMIX_A controls ON and OFF of the transfer transistor 41A, and a sorting signal DIMIX_B controls ON and OFF of the transfer transistor 41B. As illustrated, while the sorting signal DIMIX_A has the same phase as a phase of the irradiated light, the sorting signal DIMIX_B has a phase inverted from the phase of the DIMIX_A.

Therefore, the electric charges generated by the photodiode 31 receiving reflected light are transferred to the FD section 42A while the transfer transistor 41A is in an ON state in accordance with the sorting signal DIMIX_A, and are transferred to the FD section 42B while the transfer transistor 41B is in an ON state in accordance with the sorting signal DIMIX_B. By this means, in a predetermined period while irradiation of the irradiated light is periodically performed in the irradiation time T, the electric charges transferred via the transfer transistor 41A are sequentially accumulated in the FD section 42A, and the electric charges transferred via the transfer transistor 41B are sequentially accumulated in the FD section 42B.

Then, after a period while the electric charges are accumulated is finished, if the select transistor 43A is put into an ON state in accordance with a selection signal ADDRESS DECODE_A, the electric charges accumulated in the FD section 42A are read out via the signal line 33A, and a detection signal A in accordance with the electric charge amount is output from the light receiving section 14. In a similar manner, if the select transistor 43B is put into an ON state in accordance with a selection signal ADDRESS DECODE_B, the electric charges accumulated in the FD section 42B are read out via the signal line 33B, and a detection signal B in accordance with the electric charge amount is output from the light receiving section 14. Further, the electric charges accumulated in the FD section 42A are discharged in the case where the reset transistor 44A is put into an ON state in accordance with a reset signal RST_A, and the electric charges accumulated in the FD section 42B are discharged in the case where the reset transistor 44B is put into an ON state in accordance with a reset signal RST_B.

In this manner, the pixel circuit 21 can sort the electric charges generated by the reflected light received at the photodiode 31 into the tap 32A and the tap 32B in accordance with the delay time $T_{RT}$ and can output the detection signal A and the detection signal B. Then, the delay time $T_{RT}$ is time in accordance with time during which light emitted at the light emitting section 12 flies to the object, and flies to the light receiving section 14 after being reflected by the object, that is, time in accordance with the distance to the object. Therefore, the distance measurement module 11 can obtain the distance (depth) to the object in accordance with the delay time $T_{RT}$ on the basis of the detection signal A and the detection signal B.

By the way, at the distance measurement module 11, the detection signal A and the detection signal B are affected differently for each pixel circuit 21 in accordance with deviation of characteristics of respective elements such as the photodiodes 31 provided at individual pixel circuits 21. Therefore, typically, irradiated light having different phases is used, and operation for canceling out influence by the deviation of individual characteristics is performed a plurality of times on the basis of the detection signal A and the detection signal B detected from reflected light by the irradiated light having the respective phases.

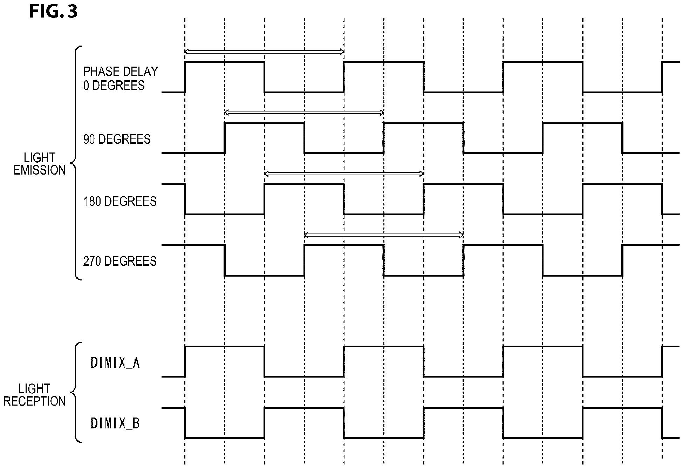

Here, detection signals which are desired for canceling out the influence by the deviation of the characteristics between the tap 32A and the tap 32B in the related art will be described with reference to FIG. 3 to FIG. 9.

For example, as illustrated in FIG. 3, four types of irradiated light with phases delayed by 90 degrees each are used. That is, four periods (quads) for respectively detecting the detection signal A and detection signal B are provided using irradiated light with a phase delayed by 90 degrees, irradiated light with a phase delayed by 180 degrees and irradiated light with a phase delayed by 270 degrees on the basis of irradiated light with a phase delayed by 0 degrees.

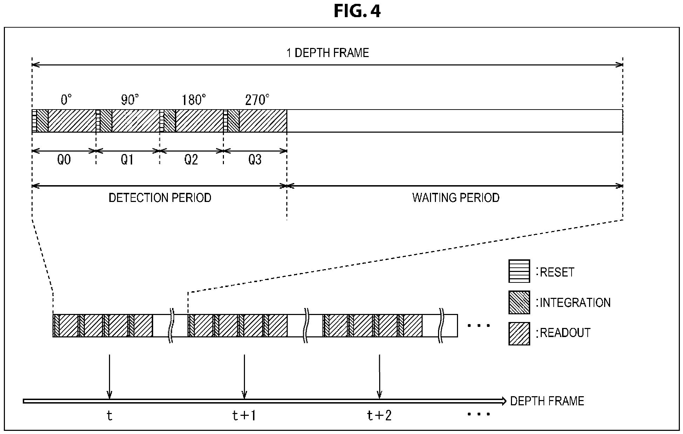

That is, as illustrated in FIG. 4, for example, a detection period Q0 during which reflected light by the irradiated light with a phase delayed by 0 degrees is detected, a detection period Q1 during which reflected light by the irradiated light with a phase delayed by 90 degrees is detected, a detection period Q2 during which reflected light by the irradiated light with a phase delayed by 180 degrees is detected, and a detection period Q3 during which reflected light by the irradiated light with a phase delayed by 270 degrees is detected, are continuously provided. Further, in the detection period Q0, the detection period Q1, the detection period Q2 and the detection period Q3, a reset period during which electric charges are reset, an integration period during which electric charges are accumulated, and a readout period during which electric charges are read out are respectively provided.

Then, one depth frame for outputting one depth map is constituted with the detection period including the detection period Q0, the detection period Q1, the detection period Q2 and the detection period Q3, and a subsequent waiting period (dead time / idle time). Such one depth frame is repeated, and depth frames are continuously output at a predetermined frame rate such that a depth frame having a frame number t, a depth frame having a frame number t+1, and a depth frame having a frame number t+2.

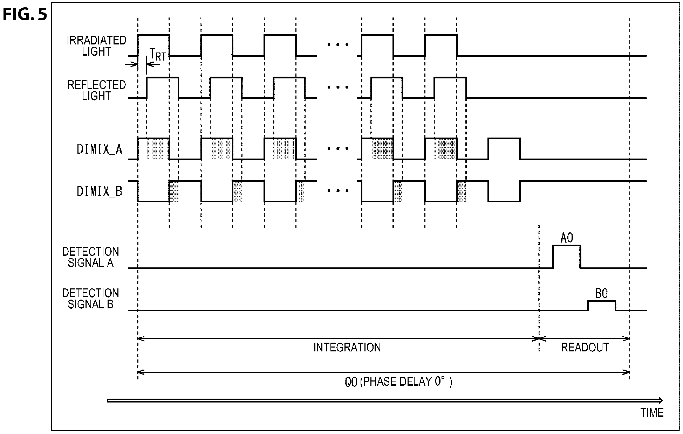

FIG. 5 illustrates an example of the irradiated light, the reflected light, the sorting signals DIMIX_A and DIMIX_B in the detection period Q0, and the detection signals A and B. As illustrated in FIG. 5, the electric charges are sorted into the tap 32A and the tap 32B in an electric charge amount in accordance with the delay time $T_{RT}$, and the electric charges are respectively accumulated in the integration period. Then, in the readout period, the electric charges of the electric charge amount accumulated in the integration period are read out, and a detection signal A0 and a detection signal B0 in the detection period Q0 are output.

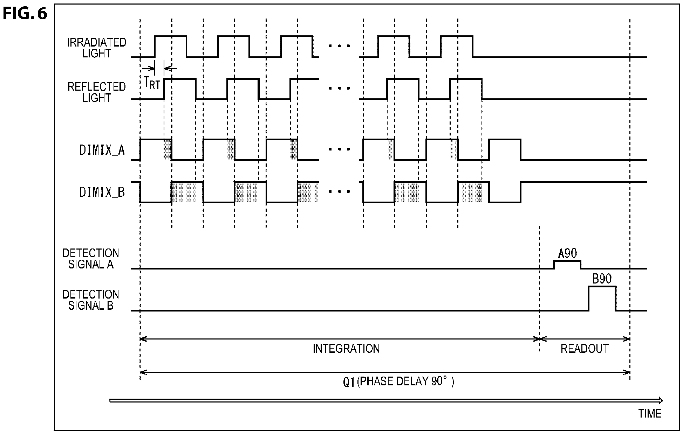

FIG. 6 illustrates an example of the irradiated light, the reflected light, the sorting signals DIMIX_A and DIMIX_B in the detection period Q1, and the detection signals A and B. As illustrated in FIG. 6, the electric charges are sorted into the tap 32A and the tap 32B in an electric charge amount in accordance with the delay time $T_{RT}$, and the electric charges are respectively accumulated in the integration period. Then, in the readout period, the electric charges of the electric charge amount accumulated in the integration period are read out, and a detection signal A90 and a detection signal B90 in the detection period Q1 are output.

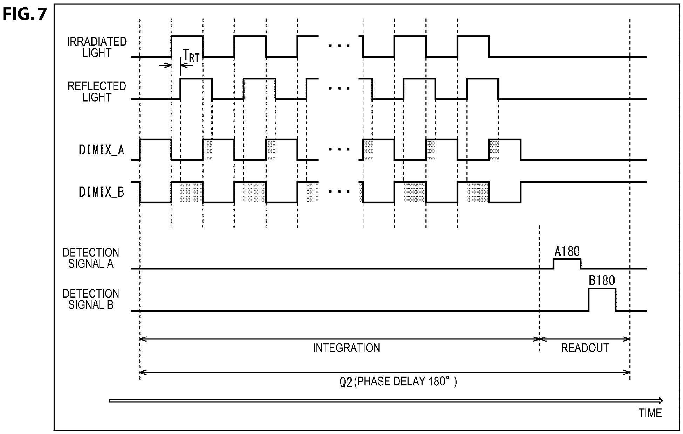

FIG. 7 illustrates an example of the irradiated light, the reflected light, the sorting signals DIMIX_A and DIMIX_B in the detection period Q2, and the detection signals A and B. As illustrated in FIG. 7, the electric charges are sorted into the tap 32A and the tap 32B in an electric charge amount in accordance with the delay time $T_{RT}$, and the electric charges are respectively accumulated in the integration period. Then, in the readout period, the electric charges of the electric charge amount accumulated in the integration period are read out, and a detection signal A180 and a detection signal B180 in the detection period Q2 are output.

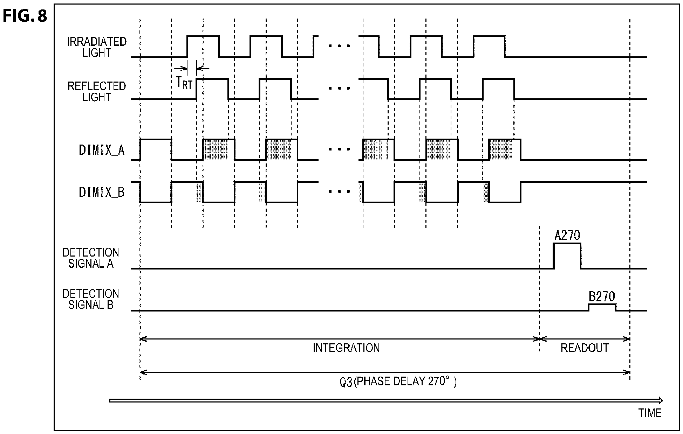

FIG. 8 illustrates an example of the irradiated light, the reflected light, the sorting signals DIMIX_A and DIMIX_B in the detection period Q3, and the detection signals A and B. As illustrated in FIG. 8, the electric charges are sorted into the tap 32A and the tap 32B in an electric charge amount in accordance with the delay time $T_{RT}$, and the electric charges are respectively accumulated in the integration period. Then, in the readout period, the electric charges of the electric charge amount accumulated in the integration period are read out, and a detection signal A270 and a detection signal B270 in the detection period Q3 are output.

In this manner, the detection signal A0 and the detection signal B0 are detected using the irradiated light with a phase delayed by 0 degrees in the detection period Q0, and the detection signal A90 and the detection signal B90 are detected using the irradiated light with a phase delayed by 90 degrees in the detection period Q1. In a similar manner, the detection signal A180 and the detection signal B180 are detected using the irradiated light with a phase delayed by 180 degrees in the detection period Q2, and the detection signal A270 and the detection signal B270 are detected using the irradiated light with a phase delayed by 270 degrees in the detection period Q3.

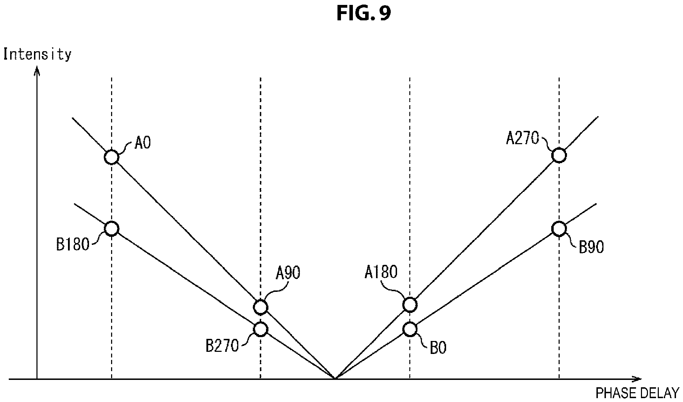

Here, FIG. 9 illustrates relationship between the detection signals A0 to A270 and the detection signals B0 to B270 in the case where a phase delay is indicated on a horizontal axis, and intensity of a signal is indicated on a vertical axis.

Then, the relationship between the detection signal A0 and the detection signal B0, the relationship between the detection signal A90 and the detection signal B90, the relationship between the detection signal A180 and the detection signal B180, and the relationship between the detection signal A270 and the detection signal B270 are modeled as expressed in the following equation (1).

$$\begin{cases} A0 - B0 = \text{Offset} - \text{Gain} \times \cos(\theta) \qquad\qquad \cdots (1) \\ A180 - B180 = \text{Offset} - \text{Gain} \times \cos(\theta + \pi) \\ A90 - B90 = \text{Offset} - \text{Gain} \times \cos(\theta + 1/2\pi) \\ A270 - B270 = \text{Offset} - \text{Gain} \times \cos(\theta + 3/2\pi) \end{cases}$$

By obtaining an Offset, a Gain, and an angle $\theta$ from this equation (1) by performing such modeling, it is, for example, possible to perform distance measurement in which influence by deviation of the characteristics between the tap 32A and the tap 32B is cancelled out. That is, to cancel out differences in the Offset and the Gain between the tap 32A and the tap 32B, eight detection signals (the detection signals A0 to A270 and the detection signals B0 to B270) detected in four detection periods Q0 to Q3 are desired.

In this manner, in related art, to perform distance measurement in which influence by deviation of the characteristics between the tap 32A and the tap 32B is cancelled out, it has been necessary to detect the detection signals A0 to A270 and the detection signals B0 to B270.

Meanwhile, the distance measurement module 11 obtains an offset and a gain of the tap 32A, and an offset and a gain of the tap 32B and compensates for deviation between them. By this means, the distance measurement module 11 can perform distance measurement in which influence by the deviation of the characteristics between the tap 32A and the tap 32B is cancelled out only by detecting the detection signal A and the detection signal B respectively in two detection periods Q0 and Q1 (or the detection periods Q2 and Q3).

There is, for example, relationship as indicated in the following equation (2) between the Offset_A and the Gain_A of the tap 32A and the Offset_B and the Gain_B of the tap 32B.

$$\begin{cases} \mathrm{Gain\_A\,(A0-Offset\_A) = Gain\_B\,(B180-Offset\_B)} & \cdots(2) \\[1em] \mathrm{Gain\_A\,(A90-Offset\_A) = Gain\_B\,(B270-Offset\_B)} \\[1em] \mathrm{Gain\_A\,(A180-Offset\_A) = Gain\_B\,(B0-Offset\_B)} \\[1em] \mathrm{Gain\_A\,(A270-Offset\_A) = Gain\_B\,(B90-Offset\_B)} \end{cases}$$

Here, the Offset_A and the Offset_B are fixed values for each pixel circuit 21, and can be obtained in advance. Meanwhile, because there is a case where the Gai_ A and the Gain_B may fluctuate in accordance with an incident angle of light depending on structures of the pixel circuits 21, it is necessary to calculate the Gain_A and the Gain_B for each depth frame.

That is, at the distance measurement module 11, the detection signals A0 to A270 and the detection signals B0 to B270 are detected in advance or in initial processing of distance measurement, and the Offset_A and the Offset_B are obtained by solving a simultaneous equation indicated in the following equation (3).

$$\begin{cases} \mathrm{(A180-Offset\_A)} = \dfrac{\mathrm{Gain\_A}}{\mathrm{Gain\_B}}\,\mathrm{(B0-Offset\_B)} & \cdots(3) \\[1.5em] \qquad\qquad\quad = \dfrac{\mathrm{A90-A0}}{\mathrm{B0-B90}}\,\mathrm{(B0-Offset\_B)} \\[1.5em] \mathrm{(A270-Offset\_A)} = \dfrac{\mathrm{Gain\_A}}{\mathrm{Gain\_B}}\,\mathrm{(B90-Offset\_B)} \\[1.5em] \qquad\qquad\quad = \dfrac{\mathrm{A90-A0}}{\mathrm{B0-B90}}\,\mathrm{(B90-Offset\_B)} \end{cases}$$

Then, at the distance measurement module 11, the Offset_A and the Offset_B are stored as offset parameters.

Thereafter, at the distance measurement module 11, a gain parameter (Gain_A / Gain_B) as indicated in the following equation (4) is obtained at timings at which the detection signal A0, the detection signal B0, the detection signal A90 and the detection signal B90 are detected.

$$\frac{\mathrm{Gain\_A}}{\mathrm{Gain\_B}} = \frac{\mathrm{A90-A0}}{\mathrm{B0-B90}} \qquad\cdots(4)$$

Further, at the distance measurement module 11, a gain parameter (Gain_A/ Gain_B) as indicated in the following equation (5) is obtained at timings at which the detection signals A180 and A270 and the detection signals B180 and B270 are detected.

$$\frac{\mathrm{Gain\_A}}{\mathrm{Gain\_B}} = \frac{\mathrm{A180-A270}}{\mathrm{B270-B180}} \qquad\cdots(5)$$

Therefore, at the distance measurement module 11, it is possible to perform correction using the offset parameters (Offset_A, Offset_B) and the gain parameters (Gain_A / Gain_B) in accordance with the following equation (6) at timings at which the detection signal A0, the detection signal B0, the detection signal A90 and the detection signal B90 are detected.

$$\begin{cases} A'180 = \dfrac{Gain\_A}{Gain\_B}(B0 - Offset\_B) + Offset\_A \\\\ A'270 = \dfrac{Gain\_A}{Gain\_B}(B90 - Offset\_B) + Offset\_A \end{cases} \quad \cdots (6)$$

OR

$$\begin{cases} B'180 = \dfrac{Gain\_B}{Gain\_A}(A0 - Offset\_A) + Offset\_B \\\\ B'270 = \dfrac{Gain\_B}{Gain\_A}(A90 - Offset\_A) + Offset\_B \end{cases}$$

By this means, at the distance measurement module 11, in the case where the detection signal A is used as a basis, corrected detection signals A'180 and A'270 can be obtained, and, in the case where the detection signal B is used as a basis, corrected detection signals B'180 and B'270 can be obtained.

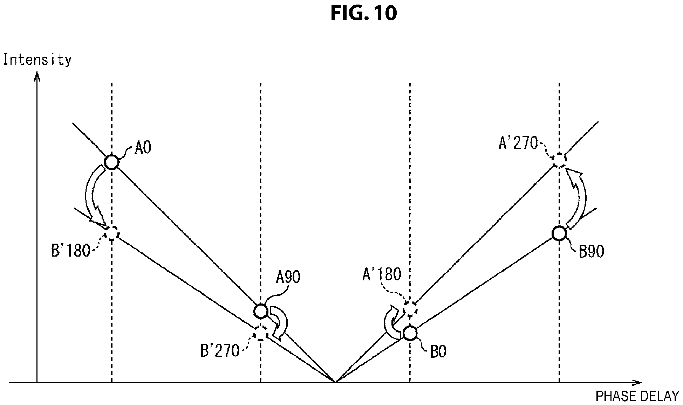

That is, as illustrated in FIG. 10, the corrected detection signal A'180 can be obtained through correction on the detection signal B0, and the corrected detection signal A'270 can be obtained through correction on the detection signal B90. Alternatively, the corrected detection signal B'180 can be obtained through correction on the detection signal A0, and the corrected detection signal B'270 can be obtained through correction on the detection signal A90.

Therefore, the distance measurement module 11 can obtain a depth and reliability by canceling out the influence by the deviation of the characteristics between the tap 32A and the tap 32B using the detection signal A0, the detection signal A90, the corrected detection signal A'180 and the corrected detection signal A'270. Alternatively, the distance measurement module 11 can obtain a depth and reliability by canceling out the influence by the deviation of the characteristics between the tap 32A and the tap 32B using the detection signal B0, the detection signal B90, the corrected detection signal B'180 and the corrected detection signal B'270.

Similarly, at the distance measurement module 11, it is possible to perform correction using the offset parameters (Offset_A, Offset_B) and the gain parameters (Gain_A / Gain_B) in accordance with the following equation (7) at timings at which the detection signal A180, the detection signal B270, the detection signal A180 and the detection signal B270 are detected.

$$\begin{cases} A'0 = \dfrac{Gain\_A}{Gain\_B}(B180 - Offset\_B) + Offset\_A \\\\ A'90 = \dfrac{Gain\_A}{Gain\_B}(B270 - Offset\_B) + Offset\_A \end{cases} \quad \cdots (7)$$

OR

$$\begin{cases} B'0 = \dfrac{Gain\_B}{Gain\_A}(A180 - Offset\_A) + Offset\_B \\\\ B'90 = \dfrac{Gain\_B}{Gain\_A}(A270 - Offset\_A) + Offset\_B \end{cases}$$

By this means, at the distance measurement module 11, in the case where the detection signal A is used as a basis, corrected detection signals A'0 and A'90 can be obtained, and, in the case where the detection signal B is used as a basis, corrected detection signals B'0 and B'90 can be obtained.

Therefore, the distance measurement module 11 can obtain a depth and reliability by canceling out the influence by the deviation of the characteristics between the tap 32A and the tap 32B using the corrected detection signal A'0, the corrected detection signal A'90, the detection signal A180 and the detection signal A270. Alternatively, the distance measurement module 11 can obtain a depth and reliability by canceling out the influence by the deviation of the characteristics between the tap 32A and the tap 32B using the corrected detection signal B'0, the corrected detection signal B'90, the detection signal B180 and the detection signal B270.

In this manner, the distance measurement module 11 performs distance measurement in which the influence by the deviation of the characteristics between the tap 32A and the tap 32B is cancelled out by obtaining the offset parameters (Offset_A, Offset_B) in advance and obtaining the gain parameter (Gain_A/ Gain_B) for each depth frame.

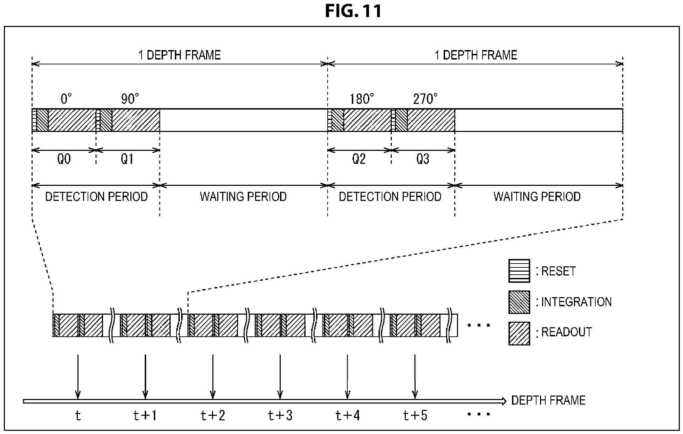

For example, as illustrated in FIG. 11, the distance measurement module 11 detects four detection signals (the detection signal A0, the detection signal B0, the detection signal A90 and the detection signal B90) in two detection periods Q0 and Q1 and outputs a depth frame having a frame number t. Subsequently, the distance measurement module 11 detects four detection signals (the detection signal A180, the detection signal B180, the detection signal A270 and the detection signal B270) in two detection periods Q2 and Q3 and outputs a depth frame having a frame number t+1.

Therefore, compared to a distance measurement method in which one depth frame is output in the four detection periods Q0 to Q3 as described above with reference to FIG. 4, the distance measurement module 11 can reduce time desired for outputting one depth frame to half. That is, the distance measurement module 11 can double a frame rate compared to the related art.

<Configuration example of distance measurement operation processing section>

FIG. 12 is a block diagram illustrating a first configuration example of the distance measurement operation processing section 15.

The distance measurement operation processing section 15 outputs a depth d(t) constituting a depth map of the frame number t and reliability c(t) constituting a reliability map of the frame number t using a detection signal A(t) and a detection signal B(t) supplied from the light receiving section 14 as image data.

First, in the case where four detection signals (a detection signal A0(t), a detection signal B0(t), a detection signal A90(t) and a detection signal B90(t)) detected with irradiated light with phases delayed by 0 degrees and 90 degrees are supplied, the distance measurement operation processing section 15 outputs the depth d(t) and the reliability c(t) of the frame number t. Subsequently, in the case where four detection signals (a detection signal A180(t+1), a detection signal B180(t+1), a detection signal A270(t+1), and a detection signal B270(t+1)) detected with irradiated light with phases delayed by 180 degrees and 270 degrees are detected, the distance measurement operation processing section 15 outputs a depth d(t+1) constituting a depth frame of a frame number t+1 and reliability c(t+1).

As illustrated in FIG. 12, the distance measurement operation processing section 15 includes a correction parameter calculating section 51 and a distance measuring section 52. The correction parameter calculating section 51 includes a deviation correction parameter calculating section 61 and a deviation correction parameter storage section 62, and calculates a gain parameter and an offset parameter. The distance measuring section 52 includes a correction operating section 71 and a distance measurement operating section 72, corrects a detection signal on the basis of the gain parameter and the offset parameter and obtains a depth.

The deviation correction parameter calculating section 61, for example, solves the following equation (8) for the Offset_A and the Offset_B in several frames upon start of distance measurement.

$$\begin{cases} (A180(t) - \text{Offset\_A}) = \dfrac{\text{Gain\_A}}{\text{Gain\_B}} (B0(t) - \text{Offset\_B}) & \cdots (8) \\ \\ (A270(t) - \text{Offset\_A}) = \dfrac{\text{Gain\_A}}{\text{Gain\_B}} (B90(t) - \text{Offset\_B}) \end{cases}$$

By this means, the deviation correction parameter calculating section 61 obtains the Offset_A and the Offset_B and stores the Offset_A and the Offset_B in the deviation correction parameter storage section 62. Note that the Offset_A and the Offset_B may be, for example, obtained in advance upon test of the distance measurement module 11 and may be stored in the deviation correction parameter storage section 62 upon shipment of the distance measurement module 11.

Then, in the case where four detection signals (a detection signal A0(t), a detection signal B0(t), a detection signal A90(t) and a detection signal B90(t)) detected with irradiated light with phases delayed by 0 degrees and 90 degrees are supplied, the deviation correction parameter calculating section 61 calculates the following equation (9). By this means, the deviation correction parameter calculating section 61 obtains a gain parameter (Gain_A/ Gain_B (t)), and supplies the gain parameter to the correction operating section 71 of the distance measuring section 52.

$$\frac{Gain\_A}{Gain\_B}(t) = \frac{A90(t) - A0(t)}{B0(t) - B90(t)} \qquad \cdots (9)$$

Subsequently, in the case where four detection signals (a detection signal A180(t+1), a detection signal B180(t+1), a detection signal A270(t+1) and a detection signal B270(t+1)) detected with irradiated light with phases delayed by 180 degrees and 270 degrees are supplied, the deviation correction parameter calculating section 61 calculates the following equation (10). By this means, the deviation correction parameter calculating section 61 obtains a gain parameter (Gain_A/ Gain_B (t+1)), and supplies the gain parameter to the correction operating section 71 of the distance measuring section 52.

$$\frac{Gain\_A}{Gain\_B}(t+1) = \frac{A180(t+1) - A270(t+1)}{B270(t+1) - B180(t+1)} \qquad \cdots (10)$$

The deviation correction parameter storage section 62 stores the offset parameters (Offset_A, Offset_B) calculated by the deviation correction parameter calculating section 61 and supplies the offset parameters to the correction operating section 71 of the distance measuring section 52. Note that the deviation correction parameter calculating section 61 obtains a gain parameter and offset parameters for each pixel circuit 21, and the deviation correction parameter storage section 62 holds the offset parameters for each pixel circuit 21.

To the correction operating section 71, a gain parameter (Gain_A / Gain_B (t)) is supplied from the deviation correction parameter calculating section 61 at timings at which the four detection signals (the detection signal A0(t), the detection signal B0(t), the detection signal A90(t) and the detection signal B90(t)) detected with irradiated light with phases delayed by 0 degrees and 90 degrees are supplied. Therefore, the correction operating section 71 can obtain corrected detection signals A'180(t) and A'270(t) or corrected detection signals B'180(t) and B'270(t) by performing operation indicated in the following equation (11) at these timings.

$$A'180(t) = \left\{ \frac{Gain\_A}{Gain\_B}(t) \right\} (B0(t) - Offset\_B) + Offset\_A \qquad \cdots (11)$$

$$A'270(t) = \left\{ \frac{Gain\_A}{Gain\_B}(t) \right\} (B90(t) - Offset\_B) + Offset\_A$$

OR

$$B'180(t) = \left\{ \frac{Gain\_A}{Gain\_B}(t) \right\} (A0(t) - Offset\_A) + Offset\_B$$

$$B'270(t) = \left\{ \frac{Gain\_A}{Gain\_B}(t) \right\} (A90(t) - Offset\_A) + Offset\_B$$

By this means, the correction operating section 71 supplies the corrected detection signals A'180(t) and A'270(t) or the corrected detection signals B'180(t) and B'270(t) at timings at which the four detection signals detected with irradiated light with phases delayed by 0 degrees and 90 degrees are supplied, to the distance measurement operating section 72.

Subsequently, to the correction operating section 71, a gain parameter (Gain_A / Gain_B (t+1)) is supplied from the deviation correction parameter calculating section 61 at timings at which the four detection signals (the detection signal A180(t +1), the detection signal B180(t +1), the detection signal A270(t +1) and the detection signal B270(t +1)) detected with irradiated light with phases delayed by 180 degrees and 270 degrees are supplied. Therefore, the correction operating section 71 can obtain corrected detection signals A'0(t+1) and A'90(t+1) or corrected detection signals B'0(t+1) and B'90(t+1) by performing operation indicated in the following equation (12) at these timings.

$$\begin{cases} A'0(t+1) = \left\{ \dfrac{Gain\_A}{Gain\_B}(t+1) \right\} (B180(t+1) - Offset\_B) + Offset\_A \\[4mm] A'90(t+1) = \left\{ \dfrac{Gain\_A}{Gain\_B}(t+1) \right\} (B270(t+1) - Offset\_B) + Offset\_A \end{cases}$$

$$OR$$

$$\begin{cases} B'0(t+1) = \left\{ \dfrac{Gain\_A}{Gain\_B}(t+1) \right\} (A180(t+1) - Offset\_A) + Offset\_B \\[4mm] B'90(t+1) = \left\{ \dfrac{Gain\_A}{Gain\_B}(t+1) \right\} (A270(t+1) - Offset\_A) + Offset\_B \end{cases}$$

$$\cdots (12)$$

By this means, the correction operating section 71 supplies the corrected detection signals A'0(t+1) and A'90(t+1) or the corrected detection signals B'0(t+1) and B'90(t+1) at timings at which the four detection signals detected with irradiated light with phases delayed by 180 degrees and 270 degrees are supplied, to the distance measurement operating section 72.

To the distance measurement operating section 72, the corrected detection signals A'180(t) and A'270(t) or the corrected detection signals B'180(t) and B'270(t) are supplied from the correction operating section 71 at timings at which the four detection signals (the detection signal A0(t), the detection signal B0(t), the detection signal A90(t) and the detection signal B90(t)) detected with irradiated light with phases delayed by 0 degrees and 90 degrees are supplied. Then, the distance measurement operating section 72 can obtain the depth d(t) and the reliability c(t) of a depth frame having a frame number t by performing operation indicated in the following equation (13).

$$\begin{cases} d(t) = \dfrac{c}{4\pi f} \tan^{-1}\left( \dfrac{D1(t) - D3(t)}{D0(t) - D2(t)} \right) \qquad\qquad \cdots (13) \\[4mm] c(t) = \sqrt{I(t)^2 + Q(t)^2} \end{cases}$$

$$Q(t) = D1(t) - D3(t)$$
$$I(t) = D0(t) - D2(t)$$

However, the distance measurement operating section 72 can use one of D0(t) = A0(t), D2(t) = A'180(t), D1(t) = A90(t), D3(t) = A'270(t), and D2(t) = B'180(t), D0(t) = B0(t), D1(t) = B'270(t), D3(t) = B90(t) in this equation (13). Alternatively, the distance measurement operating section 72 may use an average of D0(t) = A0(t), D2(t) = A'180(t), D1(t) = A90(t), D3(t) = A'270(t), and D2(t) = B'180(t), D0(t) = B0(t), D1(t) = B'270(t), D3(t) = B90(t) in this equation (13).

Subsequently, to the distance measurement operating section 72, the corrected detection signals A'0(t+1) and A'90(t+1) or the corrected detection signals B'0(t+1) and B'90(t+1) are supplied from the correction operating section 71 at timings at which the four detection signals (the detection signal A180(t+1), the detection signal B180(t+1), the detection signal A270(t+1) and the detection signal B270(t+1)) detected with irradiated light with phases delayed by 180 degrees and 270 degrees are supplied. Then, the distance measurement operating section 72 can obtain the depth d(t+1) and the reliability c(t+1) of a depth frame having a frame number t+1 by performing operation indicated in the following equation (14).

$$\begin{cases} d(t+1) = \dfrac{c}{4\pi f}\tan^{-1}\left(\dfrac{D1(t+1) - D3(t+1)}{D0(t+1) - D2(t+1)}\right) & \cdots (14) \\ \\ c(t+1) = \sqrt{I(t+1)^2 + Q(t+1)^2} \end{cases}$$

$$Q(t+1) = D1(t+1) - D3(t+1)$$
$$I(t+1) = D0(t+1) - D2(t+1)$$

However, the distance measurement operating section 72 can use one of D2(t+1) = A180(t+1), D0(t+1) = A'0(t+1), D3(t+1) = A270(t+1), D1(t+1) = A'90(t+1), and D0(t+1) = B'0(t+1), D2(t+1) = B180(t+1), D1(t+1) = B'90(t+1), D3(t+1) = B270(t+1) in this equation (14). Alternatively, the distance measurement operating section 72 may use an average of D0(t+1) = A0(t+1), D2(t+1) = A'180(t+1), D1(t+1) = A90(t+1), D3(t+1) = A'270(t+1), and D2(t+1) = B'180(t+1), D0(t+1) = B0(t+1), D1(t+1) = B'270(t+1), D3(t+1) = B90(t+1) in this equation (14).

The distance measurement operation processing section 15 having a configuration described above can obtain a depth from the four detection signals detected with irradiated light with phases delayed by 0 degrees and 90 degrees or can obtain a depth from the four detection signals detected with irradiated light with phases delayed by 180 degrees and 270 degrees. Therefore, for example, it is possible to improve a frame rate to double compared to a case where a depth is obtained from eight detection signals as in the related art.

Further, with the distance measurement operation processing section 15, because it is only necessary to emit irradiated light twice in the case of not improving a frame rate, it is possible to reduce power consumption compared to a case where irradiated light is emitted four times as in the related art. Still further, with the distance measurement operation processing section 15, because it is possible to reduce detection signals which are desired to be detected to output one depth frame to half of the related art, it is possible to reduce a data transferring band.

Therefore, the distance measurement module 11 including the distance measurement operation processing section 15 can achieve higher performance than the related art.

<First processing example of distance measurement operation processing>

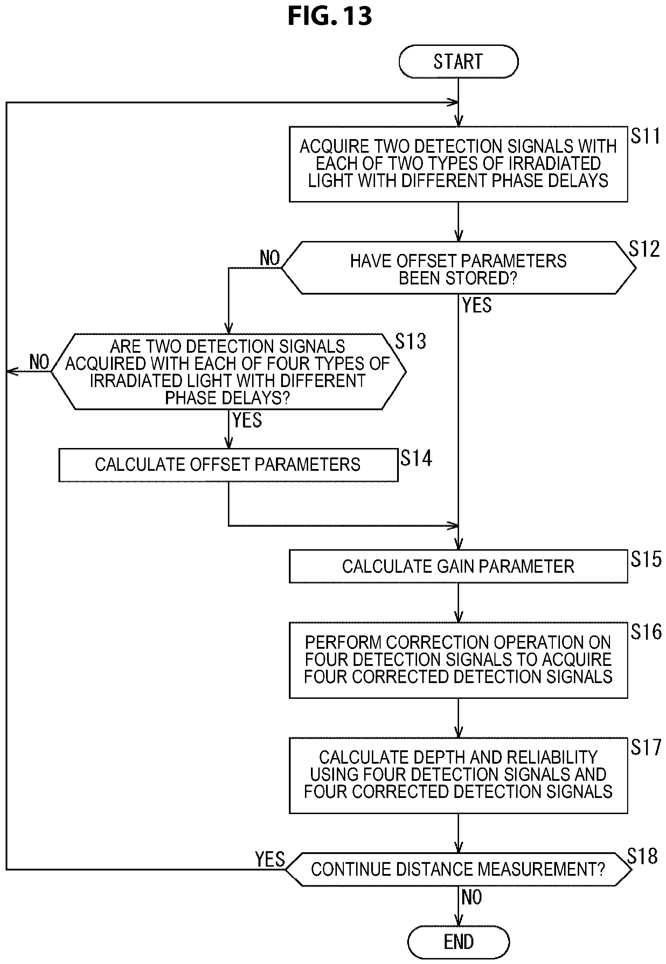

FIG. 13 is a flowchart explaining a first processing example of distance measurement operation processing to be executed at the distance measurement operation processing section 15.

For example, processing is started in the case where it is controlled by a superordinate control unit which is not illustrated to execute distance measurement operation processing. In step S11, the distance measurement operation processing section 15 acquires two detection signals with each of two types of irradiated light with different phase delays. That is, the distance measurement operation processing section 15, for example, acquires two detection signal A0 and detection signal B0 detected with irradiated light with a phase delayed by 0 degrees, and two detection signal A90 and detection signal B90 detected with irradiated light with a phase delayed by 90 degrees. Alternatively, the distance measurement operation processing section 15, for example, acquires two detection signal A180 and detection signal B180 detected with irradiated light with a phase delayed by 180 degrees and two detection signal A270 and detection signal B270 detected with irradiated light with a phase delayed by 270 degrees.

In step S12, the deviation correction parameter calculating section 61 determines whether or not the offset parameters (Offset_A, Offset_B) have been stored in the deviation correction parameter storage section 62.

In the case where the deviation correction parameter calculating section 61 determines in step S12 that the offset parameters (Offset_A, Offset_B) have not been stored in the deviation correction parameter storage section 62, the processing proceeds to step S13.

In step S13, the deviation correction parameter calculating section 61 determines whether or not two detection signals are acquired with each of four types of irradiated light with different phase delays, the two detection signals being desired for calculation of the offset parameters (Offset_A, Offset_B). For example, in the case where eight detection signals of the detection signals A0 to A270 and the detection signals B0 to B270 are acquired, the deviation correction parameter calculating section 61 determines that two detection signals are acquired with each of four types of irradiated light with different phase delays.

In the case where the deviation correction parameter calculating section 61 determines in step S13 that two detection signals are not acquired with each of four types of irradiated light with different phase delays, the processing returns to step S11. For example, in this case, the detection signals A0 and A90, and the detection signals B0 and B90 are acquired, and the deviation correction parameter calculating section 61 acquires the detection signals A180 and A270 and the detection signals B180 and B270 in the next step S11.

Meanwhile, in the case where the deviation correction parameter calculating section 61 determines in step S13 that two detection signals are acquired with each of four types of irradiated light with different phase delays, the processing proceeds to step S14.

In step S14, the deviation correction parameter calculating section 61 calculates the Offset_A and the Offset_B by solving the simultaneous equation indicated in the above-described equation (3).

Then, after the deviation correction parameter calculating section 61 stores the Offset_A and the Offset_B in the deviation correction parameter storage section 62, the processing proceeds to step S15. Meanwhile, in the case where the deviation correction parameter calculating section 61 determines in step S12 that the offset parameters (Offset_A, Offset_B) have been stored in the deviation correction parameter storage section 62, the processing proceeds to step S15.

In step S15, the deviation correction parameter calculating section 61 calculates the gain parameter (Gain_A/Gain_B) in accordance with the above-described equation (4) or equation (5). Then, the deviation correction parameter calculating section 61 supplies the calculated gain parameter (Gain_A/ Gain_B) to the correction operating section 71, and the deviation correction parameter storage section 62 supplies the stored offset parameters (Offset_A, Offset_B) to the correction operating section 71.

In step S16, the correction operating section 71 performs correction operation on the four detection signals acquired in step S11 to acquire four corrected detection signals and supplies the four corrected detection signals to the distance measurement operating section 72.

For example, in the case where the detection signals A0 and A90 and the detection signals B0 and B90 are acquired in step S11, the correction operating section 71 performs correction operation in accordance with the above-described equation (6) to acquire corrected detection signals A'180 and A'270 or corrected detection signals B'180 and B'270. Meanwhile, in the case where the detection signals A180 and A270 and the detection signals B180 and B270 are acquired in step S11, the correction operating section 71 performs correction operation in accordance with the above-described equation (7) to acquire corrected detection signals A'0 and A'90 or corrected detection signals B'0 and B'90.

In step S17, the distance measurement operating section 72 calculates a depth and reliability using the four detection signals acquired in step S11 and the four corrected detection signals acquired through correction operation in step S16.

It is assumed, for example, that the detection signals A0 and A90 and the detection signals B0 and B90 are acquired in step S11, and the corrected detection signals A'180 and A'270 or the corrected detection signals B'180 and B'270 are acquired in step S16. In this event, the distance measurement operating section 72 calculates a depth and reliability by performing the operation indicated in the above-described equation (13). Further, it is assumed that the detection signals A180 and A270 and the detection signals B180 and B270 are acquired in step S11, and the corrected detection signals A'0 and A'90 or the corrected detection signals B'0 and B'90 are acquired in step S16. In this event, the distance measurement operating section 72 calculates a depth and reliability by performing the operation indicated in the above-described equation (14).

In step S18, the distance measurement operation processing section 15, for example, determines whether or not to continue distance measurement in accordance with control for distance measurement operation processing by a superordinate control unit which is not illustrated.

In step S18, in the case where the distance measurement operation processing section 15 determines to continue distance measurement, the processing returns to step S11, and similar processing is repeated thereafter. Meanwhile, in the case where the distance measurement operation processing section 15 determines not to continue distance measurement in step S18, the distance measurement operation processing is finished.

As described above, the distance measurement operation processing section 15 can calculate a depth and reliability by acquiring the detection signals A0 and A90 and the detection signals B0 and B90 or the detection signals A180 and A270 and the detection signals B180 and B270. Therefore, the distance measurement operation processing section 15 can shorten time desired for detection of the detection signals which are desired for calculation of a depth and reliability, and, for example, can improve robustness.

<Second configuration example of distance measurement operation processing section>

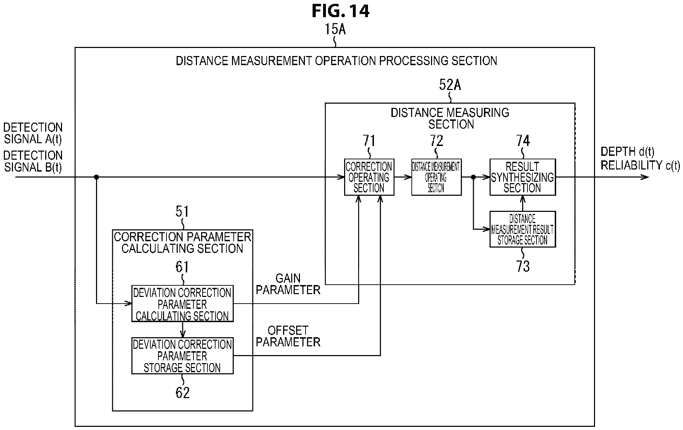

FIG. 14 is a block diagram illustrating a second configuration example of the distance measurement operation processing section 15. Note that, concerning a distance measurement operation processing section 15A illustrated in FIG. 14, the same reference numerals are assigned to components which are in common with the distance measurement operation processing section 15 in FIG. 12, and detailed description thereof will be omitted.

That is, the distance measurement operation processing section 15A includes a correction parameter calculating section 51 and a distance measuring section 52A, and the correction parameter calculating section 51 includes a deviation correction parameter calculating section 61 and a deviation correction parameter storage section 62 in a similar manner to the distance measurement operation processing section 15 in FIG. 12.

While the distance measuring section 52A includes a correction operating section 71 and a distance measurement operating section 72 in a similar manner to the distance measurement operation processing section 15 in FIG. 12, the distance measuring section 52A is different from the distance measurement operation processing section 15 in FIG. 12 in that a distance measurement result storage section 73 and a result synthesizing section 74 are provided.

Further, in the distance measuring section 52A, the depth d(t) and the reliability c(t) obtained by the distance measurement operating section 72 as described above are supplied to the distance measurement result storage section 73 and the result synthesizing section 74 as distance measurement results. Then, in the distance measuring section 52A, distance measurement results of a frame one frame before the frame, that is, a depth d(t-1) and reliability c(t-1) are supplied from the distance measurement result storage section 73 to the result synthesizing section 74.

The distance measurement result storage section 73 can store the depth d(t) and the reliability c(t) corresponding to one frame, supplied from the distance measurement operating section 72, and supplies the depth d(t-1) and the reliability c(t-1) of the frame one frame before the frame to the result synthesizing section 74.

The result synthesizing section 74 synthesizes the depth d(t) and the reliability c(t) supplied from the distance measurement operating section 72 and the depth d(t-1) and the reliability c(t-1) supplied from the distance measurement result storage section 73 and outputs a depth d(t) and reliability c(t) obtained as the synthesis results.

Here, the depth d(t) and the reliability c(t) supplied from the distance measurement operating section 72 to the distance measurement result storage section 73 and the result synthesizing section 74 will be expressed as a depth d'(t) and reliability c'(t), and the synthesis results by the result synthesizing section 74 will be expressed as a depth d(t) and reliability c(t). In this case, the result synthesizing section 74 can synthesize distance measurement results using weighting operation as indicated in the following equation (15) using a weight g based on the reliability c'(t).

$$\begin{cases} d(t) = g \times d'(t) + (1-g) \times d'(t-1) \\ c(t) = g \times c'(t) + (1-g) \times c'(t-1) \end{cases} \qquad \cdots (15)$$

$$g = \frac{c'(t)}{c'(t) + c'(t-1)}$$

In this manner, at the distance measurement operation processing section 15A, by the distance measurement results of the current frame and the distance measurement results of the frame one frame before the current frame being synthesized (hereinafter, also referred to as slide window), it is possible to improve a signal noise (SN) ratio and reduce noise in the synthesis result.

For example, in the case where the detection periods Q0 to Q3 are the same as those in the case where slide window is not performed, the SN ratio of the distance measurement results using the four detection signals detected in two detection periods Q0 and Q1 becomes lower than that of the distance measurement results using eight detection signals detected in four detection periods Q0 to Q3. Therefore, because, at the distance measurement operation processing section 15A, distance measurement is performed using eight detection signals including the detection signals of the frame one frame before the frame by slide window being performed, it is possible to suppress lowering of the SN ratio.

Further, at the distance measurement operation processing section 15A, even if the detection period in one depth frame is shortened, by slide window being performed, it is possible to improve an SN ratio per power desired for acquisition of the detection signals in one depth frame (frame $\times$ SNR / power).

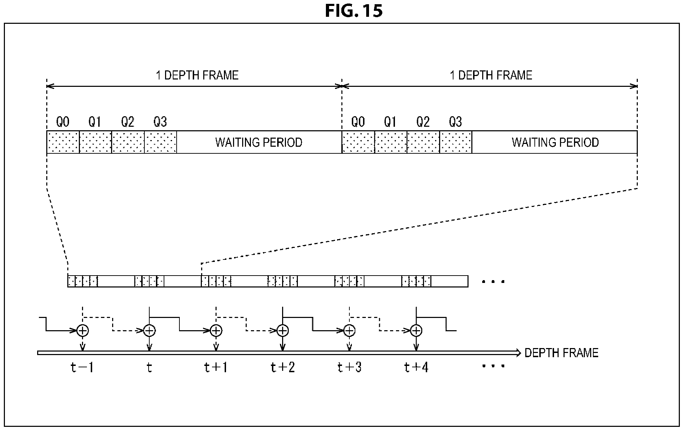

Therefore, because the distance measurement operation processing section 15A can reduce noise by performing slide window, as illustrated in FIG. 15, it is possible to shorten the detection periods Q0 and Q3 to half of the detection periods in FIG. 4. That is, the distance measurement operation processing section 15A can improve acquisition speed of the detection signals A and B to double and can double a frame rate.

Here, for example, in the case where slide window is not performed, under conditions that power desired for acquisition of the detection signals is not changed for one depth frame and the frame rate is made to double, the SN ratio degrades by a degree corresponding to the detection periods Q0 and Q3 being shortened. In contrast, at the distance measurement operation processing section 15A, even if the frame rate is made to double without changing power desired for acquisition of the detection signals in one depth frame, it is possible to avoid degradation of the SN ratio by performing slide window.

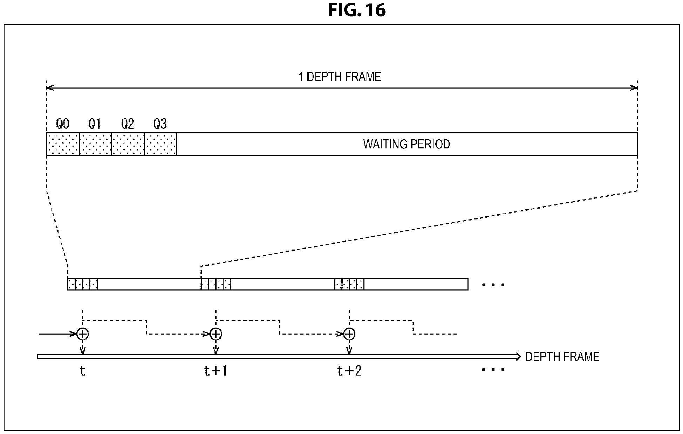

Alternatively, as illustrated in FIG. 16, under conditions that the frame rate is not changed in the detection periods Q0 to Q3 which are the same as the periods in FIG. 4, and the SN ratio is not changed, it is possible to reduce power desired for acquisition of the detection signals in one depth frame. That is, the distance measurement operation processing section 15A can realize lower power consumption by performing slide window.

Note that, at the distance measurement operation processing section 15A, the result synthesizing section 74 may, for example, synthesize the distance measurement results through simple average, or may synthesize the distance measurement results through weighting based on a reference other than the reliability, as well as by performing weighting operation based on the reliability.

Further, for example, the processing of synthesizing the distance measurement results by the result synthesizing section 74 may be applied to a configuration in which one depth frame is output through four detection periods Q0 to Q3 as described above with reference to FIG. 4. That is, application of the processing is not limited to application to a configuration in which one depth frame is output on the basis of the four detection signals detected through two detection periods Q0 and Q1 or the four detection signals detected through two detection periods Q2 and Q3. Still further, for example, slide window may be performed so that the acquired three detection signals and one detection signal of a newly acquired frame are synthesized for each period of the four detection periods Q0 to Q3.

<Second processing example of distance measurement operation processing>

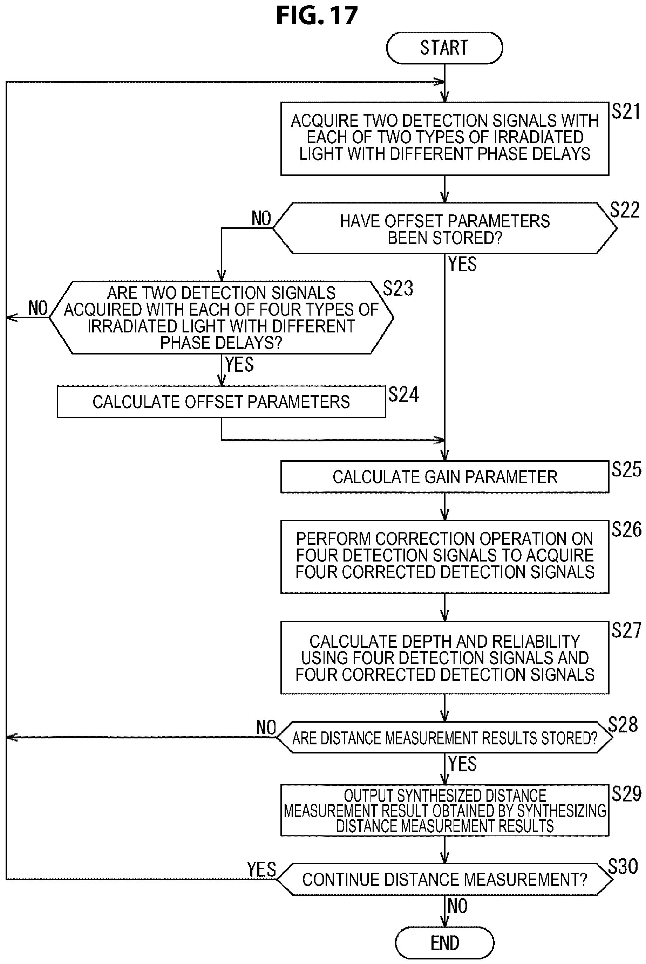

FIG. 17 is a flowchart explaining a second processing example of distance measurement operation processing to be executed at the distance measurement operation processing section 15A.

In step S21 to S27, processing similar to that in step S11 to S17 in FIG. 13 is performed.

Then, in step S27, the calculated depth and reliability are supplied to the distance measurement result storage section 73 and the result synthesizing section 74, and, in step S28, the result synthesizing section 74 determines whether or not the distance measurement results are stored in the distance measurement result storage section 73.

In the case where the result synthesizing section 74 determines in step S28 that the distance measurement results are not stored in the distance measurement result storage section 73, the processing returns to step S21. That is, in this case, the depth and the reliability of a frame one frame before the frame are not stored in the distance measurement result storage section 73, and the result synthesizing section 74 does not perform processing of synthesizing the distance measurement results.

Meanwhile, in the case where the result synthesizing section 74 determines in step S28 that the distance measurement results are stored in the distance measurement result storage section 73, the processing proceeds to step S29.

In step S29, the result synthesizing section 74 reads out the depth and the reliability of the frame one frame before the frame from the distance measurement result storage section 73. Then, the result synthesizing section 74 outputs a synthesized distance measurement result obtained by synthesizing the measurement results of the depth and the reliability supplied in step S27 and the depth and the reliability of the frame one frame before the frame read out from the distance measurement result storage section 73, by performing weighting operation based on the reliability.

Thereafter, in step S30, processing similar to that in step S18 in FIG. 13 is performed, and, in the case where it is determined not to continue distance measurement, the distance measurement operation processing is finished.

As described above, the distance measurement operation processing section 15A can realize lowering of the SN ratio of the measurement result by synthesizing the measurement results through weighting operation based on the reliability, and can perform distance measurement with higher accuracy. Further, the distance measurement operation processing section 15A can improve a frame rate (see FIG. 15) or reduce power consumption (see FIG. 16).

<Operation of light emitting section and light receiving section>

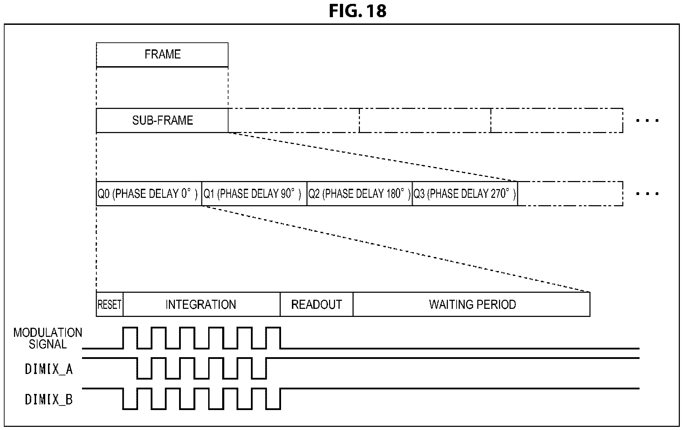

Operation of the light emitting section 12 and the light receiving section 14 will be described with reference to FIG. 18 to FIG. 21.

FIG. 18 illustrates an example of timings of light emission and light reception for outputting one depth map.

For example, the distance measurement module 11 can set one frame for outputting a depth map as one sub-frame, and one sub-frame is divided into four detection periods of the detection period Q0, the detection period Q1, the detection period Q2 and the detection period Q3. Further, in respective integration periods of the detection period Q0, the detection period Q1, the detection period Q2 and the detection period Q3, the light emitting section 12 emits irradiated light at timings in accordance with a modulation signal, and the light receiving section 14 receives the reflected light. As described with reference to FIG. 1, electric charges generated at one photodiode 31 are sorted into the tap 32A and the tap 32B in accordance with the sorting signals DIMIX_A and DIMIX_B, and the electric charges in accordance with amounts of light received in the integration periods are accumulated.

Here, in the above-described example illustrated in FIG. 4, a waiting period corresponding to one depth frame is provided after the detection period Q0, the detection period Q1, the detection period Q2 and the detection period Q3. In contrast, in the example illustrated in FIG. 18, waiting periods divided into four periods are respectively provided after the detection period Q0, the detection period Q1, the detection period Q2 and the detection period Q3.

In this manner, by the waiting periods being respectively provided for the detection period Q0, the detection period Q1, the detection period Q2 and the detection period Q3, it is possible to make intervals of the respective integration periods equal.

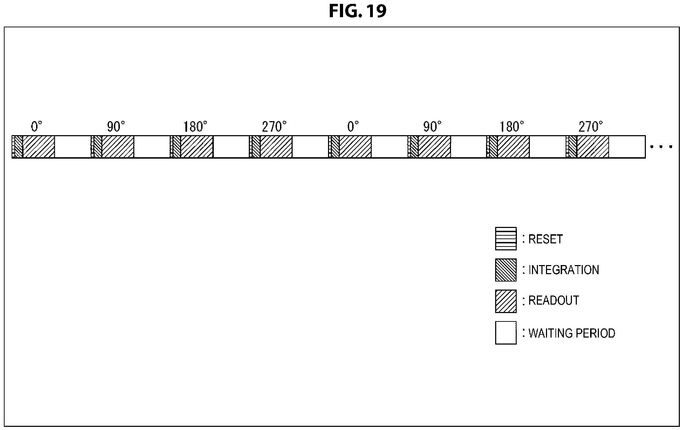

That is, as illustrated in FIG. 19, a light emission timing of irradiated light with a phase delayed by 0 degrees, a light emission timing of irradiated light with a phase delayed by 90 degrees, a light emission timing of irradiated light with a phase delayed by 180 degrees, and a light emission timing of irradiated light with a phase delayed by 270 degrees are set at equal intervals. In this manner, by employing the light emission timings at equal intervals, it is possible to suppress negative effects due to the light emission timings being different, for example, when slide window is performed as in the distance measurement operation processing section 15A.

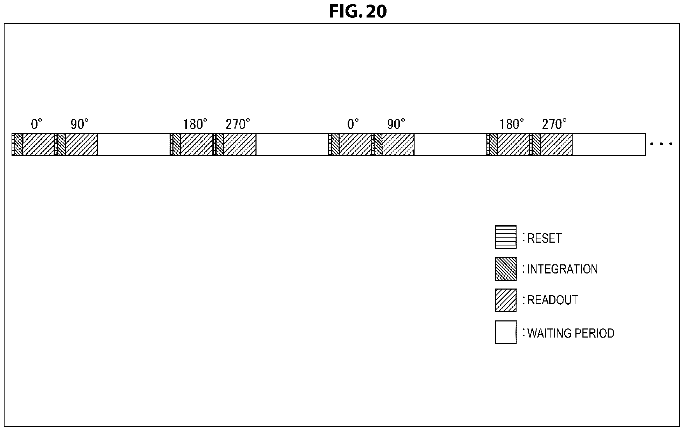

Further, it is also possible to employ light emission timings as illustrated in FIG. 20. As described above, the distance measurement operation processing section 15 acquires one depth frame from the four detection signals of the detection signal A0, the detection signal B0, the detection signal A90 and the detection signal B90, and acquires one depth frame from the four detection signals of the detection signal A180, the detection signal B180, the detection signal A270 and the detection signal B270.

Therefore, as illustrated in FIG. 20, it is preferable that a light emission timing of irradiated light with a phase delayed by 0 degrees and a light emission timing of irradiated light with a phase delayed by 90 degrees for acquiring certain one depth frame are close to each other, and a light emission timing of irradiated light with a phase delayed by 180 degrees and a light emission timing of irradiated light with a phase delayed by 270 degrees for acquiring the next one depth frame are close to each other. For example, by making the light emission timings for acquiring one depth frame close to each other, in the case where an object is moving, it is possible to suppress influence on a longer interval between the light emission timings, provided by the movement.

Further, when slide window is performed as in the distance measurement operation processing section 15A, as a result of a light emission timing for acquiring certain one depth frame and a light emission timing for acquiring the next one depth frame being set at equal intervals, it is possible to suppress negative effects due to the intervals being different.

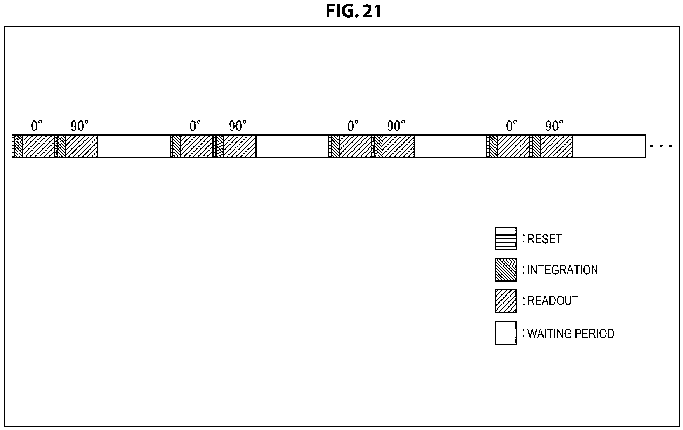

Further, it is also possible to employ light emission timings as illustrated in FIG. 21. That is, the distance measurement operation processing section 15 can acquire a depth frame using only the irradiated light with a phase delayed by 0 degrees and the irradiated light with a phase delayed by 90 degrees if the Offset_A and the Offset_B are obtained in advance.

Note that the light emission timings of the light emitting section 12 are not limited to the examples illustrated in FIG. 18 to FIG. 21, and other various light emission timings can be employed.

<Third configuration example of distance measurement operation processing section>

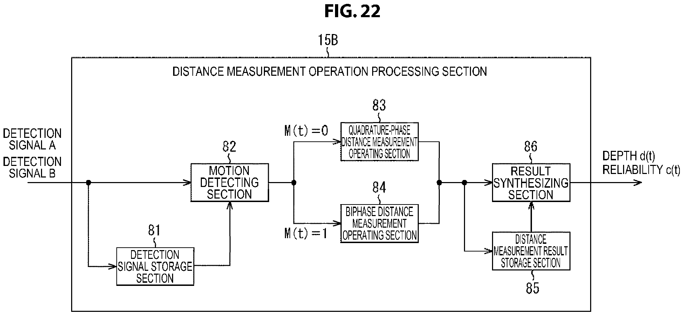

FIG. 22 is a block diagram illustrating a third configuration example of the distance measurement operation processing section 15.

The distance measurement operation processing section 15B illustrated in FIG. 22 includes a detection signal storage section 81, a motion detecting section 82, a quadrature-phase distance measurement operating section 83, a biphase distance measurement operating section 84, a distance measurement result storage section 85 and a result synthesizing section 86.

Further, in a similar manner as described with reference to FIG. 12, to the distance measurement operation processing section 15B, four detection signals detected with irradiated light with a phase delayed by 0 degrees and irradiated light with a phase delayed by 90 degrees are supplied, and four detection signals detected with irradiated light with a phase delayed by 180 degrees and irradiated light with a phase delayed by 270 degrees are supplied. That is, to the distance measurement operation processing section 15B, the detection signal A0(t), the detection signal B0(t), the detection signal A90(t) and the detection signal B90(t) are supplied, and continuously, a detection signal A180(t+1), a detection signal B180(t+1), a detection signal A270(t+1) and a detection signal B270(t+1) are supplied.

The detection signal storage section 81 can store four detection signals, and supplies stored previous four detection signals to the motion detecting section 82 every time the four detection signals are supplied.

That is, the detection signal storage section 81 stores a detection signal A180(t-1), a detection signal B180(t-1), a detection signal A270(t-1) and a detection signal B270(t-1) and supplies these detection signals to the motion detecting section 82 at timings at which the detection signal A0(t), the detection signal B0(t), the detection signal A90(t) and the detection signal B90(t) are supplied. Further, the detection signal storage section 81 stores the detection signal A0(t), the detection signal B0(t), the detection signal A90(t) and the detection signal B90(t) and supplies these detection signals to the motion detecting section 82 at timings at which the detection signal A180(t+1), the detection signal B180(t+1), the detection signal A270(t+1) and the detection signal B270(t+1) are supplied.

The motion detecting section 82 detects motion of a subject for each pixel of the light receiving section 14 and judges whether or not a moving subject appears on the basis of a predetermined threshold th.

That is, the motion detecting section 82 performs judgement in accordance with determination conditions indicated in the following equation (16) at timings at which the detection signal A0(t), the detection signal B0(t), the detection signal A90(t) and the detection signal B90(t) are supplied.

$$\left\{ \begin{array}{l} |A0(t)+A180(t-1)-\{A90(t)+A270(t-1)\}| < th \\[2mm] |B0(t)+B180(t-1)-\{B90(t)+B270(t-1)\}| < th \end{array} \right. \qquad \cdots (16)$$

For example, the motion detecting section 82 judges that a moving subject does not appear in a depth frame acquired on the basis of the detection signal A0(t), the detection signal B0(t), the detection signal A90(t) and the detection signal B90(t) in the case where the determination conditions in equation (16) are satisfied. In this case, the motion detecting section 82 outputs a moving subject detection signal M(t) = 0 indicating that a moving subject does not appear, and supplies the detection signal A0(t), the detection signal B0(t), the detection signal A90(t) and the detection signal B90(t) to the quadrature-phase distance measurement operating section 83. Further, the motion detecting section 82 supplies the detection signal A180(t-1), the detection signal B180(t-1), the detection signal A270(t-1) and the detection signal B270(t-1) supplied from the detection signal storage section 81 to the quadrature-phase distance measurement operating section 83.

Meanwhile, in the case where the determination conditions in equation (16) are not satisfied, the motion detecting section 82 judges that a moving subject appears in the depth frame acquired on the basis of the detection signal A0(t), the detection signal B0(t), the detection signal A90(t) and the detection signal B90(t). In this case, the motion detecting section 82 outputs the moving subject detection signal M(t) = 1 indicating that a moving subject appears, and supplies the detection signal A0(t), the detection signal B0(t), the detection signal A90(t) and the detection signal B90(t) to the biphase distance measurement operating section 84.

In a similar manner, the motion detecting section 82 performs judgement in accordance with determination conditions indicated in the following equation (17) at timings at which the detection signal A180(t+1), the detection signal B180(t+1), the detection signal A270(t+1) and the detection signal B270(t+1) are supplied.

$$\left\{ \begin{array}{l} |A180(t+1)+A0(t)-\{A270(t+1)+A90(t)\}| < th \\[2mm] |B180(t+1)+B0(t)-\{B270(t+1)+B90(t)\}| < th \end{array} \right. \qquad \cdots (17)$$

For example, the motion detecting section 82 judges that a moving subject does not appear in a depth frame acquired on the basis of the detection signal A 180(t+1), the detection signal B180(t+1), the detection signal A270(t+1) and the detection signal B270(t+1) in the case where the determination conditions in equation (17) are satisfied. In this case, the motion detecting section 82 outputs a moving subject detection signal M(t) = 0 indicating that a moving subject does not appear, and supplies the detection signal A180(t+1), the detection signal B180(t+1), the detection signal A270(t+1) and the detection signal B270(t+1) to the quadrature-phase distance measurement operating section 83. Further, the motion detecting section 82 supplies the detection signal A0(t), the detection signal B0(t), the detection signal A90(t) and the detection signal B90(t) supplied from the detection signal storage section 81 to the quadrature-phase distance measurement operating section 83.

Meanwhile, in the case where the determination conditions in equation (17) are not satisfied, the motion detecting section 82 judges that a moving subject appears in the depth frame acquired on the basis of the detection signal A180(t+1), the detection signal B180(t+1), the detection signal A270(t+1) and the detection signal B270(t+1). In this case, the motion detecting section 82 outputs the moving subject detection signal M(t) = 1 indicating that a moving subject appears, and supplies the detection signal A180(t+1), the detection signal B180(t+1), the detection signal A270(t+1) and the detection signal B270(t+1) to the biphase distance measurement operating section 84.

In the case where it is judged by the motion detecting section 82 that a moving subject does not appear, the quadrature-phase distance measurement operating section 83 performs processing of measuring a distance (hereinafter, referred to as quadrature-phase distance measurement operation processing) through operation using eight detection signals of the irradiated light with a phase delayed by 0 degrees, the irradiated light with a phase delayed by 90 degrees, the irradiated light with a phase delayed by 180 degrees, and the irradiated light with a phase delayed by 270 degrees.

For example, in this case, the detection signal A180(t-1), the detection signal B180(t-1), the detection signal A270(t-1) and the detection signal B270(t-1), the detection signal A0(t), the detection signal B0(t), the detection signal A90(t) and the detection signal B90(t) are supplied to the quadrature-phase distance measurement operating section 83 from the motion detecting section 82.

Therefore, the quadrature-phase distance measurement operating section 83 obtains the depth d(t) and the reliability c(t) by performing operation in accordance with the following equation (18) and supplies the depth d(t) and the reliability c(t) to the distance measurement result storage section 85 and the result synthesizing section 86.

$$
\left\{
\begin{array}{l}
d(t) = \dfrac{c}{4\pi f}\tan^{-1}\left(\dfrac{D1(t)-D3(t)}{D0(t)-D2(t)}\right) \\[4mm]
c(t) = \sqrt{I(t)^2 + Q(t)^2}
\end{array}
\right.
\qquad \cdots (18)
$$

$$
\begin{aligned}
Q(t) &= D1(t) - D3(t) \\
I(t) &= D0(t) - D2(t) \\
D0(t) &= A0(t) - B0(t) \\
D1(t) &= A90(t) - B90(t) \\
D2(t) &= A180(t-1) - B180(t-1) \\
D3(t) &= A270(t-1) - B270(t-1)
\end{aligned}
$$

In a similar manner, the quadrature-phase distance measurement operating section 83 can obtain a depth d(t+1) and reliability c(t+1) using the detection signal A0(t), the detection signal B0(t), the detection signal A90(t), the detection signal B90(t), the detection signal A180(t+1), the detection signal B180(t+1), the detection signal A270(t+1) and the detection signal B270(t+1).

The biphase distance measurement operating section 84 has the same functions as the functions of the distance measurement operation processing section 15 in FIG. 12 and includes the correction parameter calculating section 51 and the distance measuring section 52 illustrated in FIG. 12.

That is, in the case where it is judged by the motion detecting section 82 that a moving subject appears, the biphase distance measurement operating section 84 performs processing of measuring a distance (hereinafter, referred to as biphase distance measurement operation processing) through operation using four detection signals detected with the irradiated light with a phase delayed by 0 degrees and the irradiated light with a phase delayed by 90 degrees, or four detection signals detected with the irradiated light with a phase delayed by 180 degrees and the irradiated light with a phase delayed by 270 degrees. The biphase distance measurement operating section 84 then supplies the depth d and the reliability c obtained through the biphase distance measurement operation processing to the distance measurement result storage section 85 and the result synthesizing section 86.

The distance measurement result storage section 85 and the result synthesizing section 86 have the same functions as the distance measurement result storage section 73 and the result synthesizing section 74 in FIG. 14. That is, the distance measurement result storage section 85 supplies the distance measurement results of a frame one frame before the frame to the result synthesizing section 74, and the distance measurement result storage section 85 can synthesize the distance measurement results of the current frame and the distance measurement results of the frame one frame before the current frame.

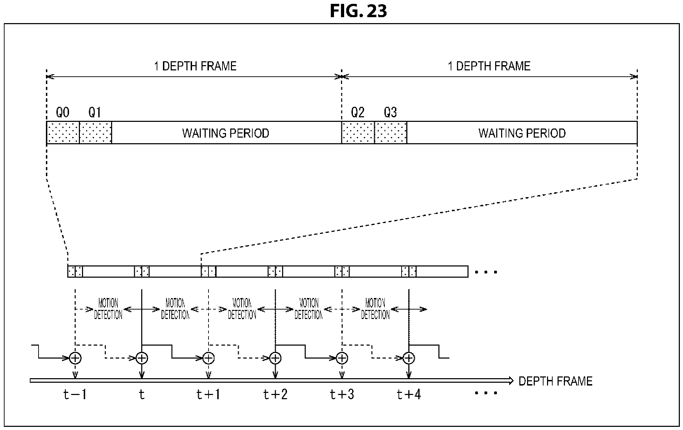

In this manner, as illustrated in FIG. 23, the distance measurement operation processing section 15B can synthesize two continuous depth frames and output the synthesized frame as one depth frame in accordance with a result of motion detection for each frame.

For example, in the case where it is judged as a result of motion detection from the distance measurement results of the frame having the frame number t-1 before the distance measurement results are synthesized that a moving subject appears at a timing at which the depth frame having the frame number t is output, the distance measurement operation processing section 15B outputs the distance measurement results of the frame having the frame number t as the depth frame as is. Meanwhile, in the case where it is judged as a result of motion detection from the depth frame having the frame number t-1 before the distance measurement results are synthesized that a moving subject does not appear at a timing at which the depth frame having the frame number t is output, the distance measurement operation processing section 15B outputs a synthesized distance measurement result obtained through synthesis with the distance measurement results of the frame having the frame number t-1 as the depth frame having the frame number t. Note that the motion detecting section 82 may perform motion detection for each pixel and may switch processing between the quadrature-phase distance measurement operating section 83 and the biphase distance measurement operating section 84 for each pixel as well as switch processing between the quadrature-phase distance measurement operating section 83 and the biphase distance measurement operating section 84 in this manner.

As described above, the distance measurement operation processing section 15B can switch the quadrature-phase distance measurement operation processing and the biphase distance measurement operation processing in accordance with the result of motion detection. Therefore, the distance measurement operation processing section 15B can improve measurement accuracy for a moving subject by obtaining the depth frame at a higher frame rate, for example, by performing the biphase distance measurement operation processing in the case where a moving subject appears. By this means, the distance measurement operation processing section 15B can improve robustness for a moving subject. Further, in the case where a moving subject does not appear, the distance measurement operation processing section 15B can realize lower noise by performing the quadrature-phase distance measurement operation processing. Note that the motion detecting section 82 may switch between the quadrature-phase distance measurement operating section 83 and the biphase distance measurement operating section 84 by performing condition judgment on the basis of brightness obtained from the detection signals or by performing condition judgment on the basis of reliability of the frame one frame before the frame.

<Third processing example of distance measurement operation processing>

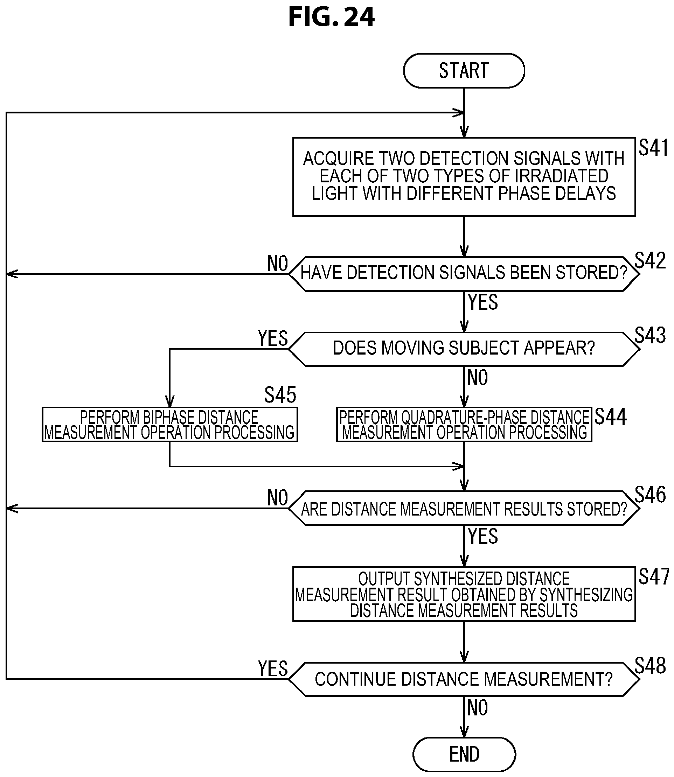

FIG. 24 is a flowchart explaining a third processing example of the distance measurement operation processing to be executed at the distance measurement operation processing section 15B.

In step S41, processing similar to that in step S11 in FIG. 13 is performed, and the distance measurement operation processing section 15B acquires two detection signals with each of two types of irradiated light having different phase delays.

In step S41, the motion detecting section 82 determines whether or not the detection signals have been stored in the detection signal storage section 81.

In step S41, in the case where the motion detecting section 82 determines that the detection signals have not been stored in the detection signal storage section 81, the processing returns to step S41. That is, in this case, the detection signals of a frame one frame before the frame are not stored in the detection signal storage section 81, and the motion detecting section 82 does not perform processing of detecting motion.

Meanwhile, in step S41, in the case where the motion detecting section 82 determines that the detection signals have been stored in the detection signal storage section 81, the processing proceeds to step S43. In step S43, the motion detecting section 82 determines whether or not a moving subject appears in accordance with determination conditions indicated in the above-described equation (16) or equation (17).

In step S43, in the case where the motion detecting section 82 determines that a moving subject does not appear, the processing proceeds to step S44. In step S44, the quadrature-phase distance measurement operating section 83 obtains a depth and reliability by performing the quadrature-phase distance measurement operation processing as described above and supplies the depth and the reliability to the distance measurement result storage section 85 and the result synthesizing section 86 as the distance measurement results, and the processing proceeds to step S46.

Meanwhile, in the case where the motion detecting section 82 determines in step S43 that a moving subject appears, the processing proceeds to step S45. In step S45, the biphase distance measurement operating section 84 obtains a depth and reliability by performing the biphase distance measurement operation processing as described above, supplies the depth and the reliability to the distance measurement result storage section 85 and the result synthesizing section 85 as the distance measurement results, and the processing proceeds to step S46.

In step S46 to S48, processing similar to that in step S28 to S30 in FIG. 17 is performed, and, in the case where it is determined in step S48 not to continue distance measurement, the distance measurement operation processing is finished.

As described above, by switching between the quadrature-phase distance measurement operation processing and the biphase distance measurement operation processing in accordance with a result of motion detection, the distance measurement operation processing section 15B can perform appropriate distance measurement on the moving subject.

Note that the present technology can be applied to a scheme for modulating an amplitude of light projected on an object, which is called a Continuous-Wave scheme among the Indirect ToF scheme. Further, a structure of the photodiode 31 of the light receiving section 14 can be also applied to a depth sensor having a structure in which electric charges are sorted into two taps: a tap 32A and a tap 32B as well as a depth sensor having a current assisted photonic demodulator (CAPD) structure.

Further, as irradiated light radiated on an object from the distance measurement module 11, irradiated light other than the four types of irradiated light with phases delayed by 90 degrees each as described above may be used, and detection signals of an arbitrary number other than four can be used for distance measurement in accordance with these types of irradiated light. Further, parameters other than the offset parameter and the gain parameter may be employed as parameters to be used for correction operation if it is possible to cancel out influence by the deviation of the characteristics between the tap 32A and the tap 32B.

<Configuration example of electronic equipment>

The distance measurement module 11 as described above can be, for example, mounted on electronic equipment such as a smartphone.

FIG. 25 is a block diagram illustrating a configuration example of an imaging apparatus mounted on the electronic equipment.

As illustrated in FIG. 25, in the electronic equipment 101, a distance measurement module 102, an imaging apparatus 103, a display 104, a speaker 105, a microphone 106, a communication module 107, a sensor unit 108, a touch panel 109 and a control unit 110 are connected via a bus 111. Further, the control unit 110 has functions as an application processing section 121 and an operation system processing section 122 by a CPU executing programs.

The distance measurement module 11 in FIG. 1 is applied as the distance measurement module 102. For example, the distance measurement module 102 is disposed on a front side of the electronic equipment 101, and, by performing distance measurement targeted at a user of the electronic equipment 101, can output a depth of a surface shape of the face, the hand, the finger, or the like of the user.

The imaging apparatus 103 is disposed on the front side of the electronic equipment 101 and acquires an image in which the user appears by capturing an image of the user of the electronic equipment 101 as a subject. Note that, while not illustrated, it is also possible to employ a configuration where the imaging apparatus 103 is also disposed on a back side of the electronic equipment 101.

The display 104 displays an operation screen for performing processing by the application processing section 121 and the operation system processing section 122, an image captured by the imaging apparatus 103, or the like. The speaker 105 and the microphone 106, for example, output speech on the other side and collect speech of the user when a call is made using the electronic equipment 101.

The communication module 107 performs communication via a communication network. The sensor unit 108 senses speed, acceleration, proximity, or the like, and the touch panel 109 acquires touch operation by the user on the operation screen displayed at the display 104.

The application processing section 121 performs processing for providing various kinds of service by the electronic equipment 101. For example, the application processing section 121 can perform processing of creating the face using computer graphics in which expression of the user is virtually reproduced on the basis of the depth supplied from the distance measurement module 102 and displaying the face at the display 104. Further, the application processing section 121 can, for example, perform processing of creating three-dimensional shape data of an arbitrary stereoscopic object on the basis of the depth supplied from the distance measurement module 102.

The operation system processing section 122 performs processing for implementing basic functions and operation of the electronic equipment 101. For example, the operation system processing section 122 can perform processing of authenticating the face of the user on the basis of the depth supplied from the distance measurement module 102 and releasing the lock on the electronic equipment 101. Further, the operation system processing section 122 can, for example, perform processing of authenticating gesture of the user on the basis of the depth supplied from the distance measurement module 102 and inputting various kinds of operation in accordance with the gesture.

At the electronic equipment 101 having such a configuration, it is possible to realize, for example, improvement of a frame rate, reduction of power consumption and reduction of a data transferring band by applying the above-described distance measurement module 11. By this means, the electronic equipment 101 can create the face which moves more smoothly using computer graphics, can authenticate the face with high accuracy, can suppress consumption of a battery or can perform data transfer in a narrower band.

<Configuration example of computer>

The above-described series of processing can be performed with hardware or with software. In the case where a series of processing is performed with software, programs constituting the software are installed on a general-purpose computer, or the like.

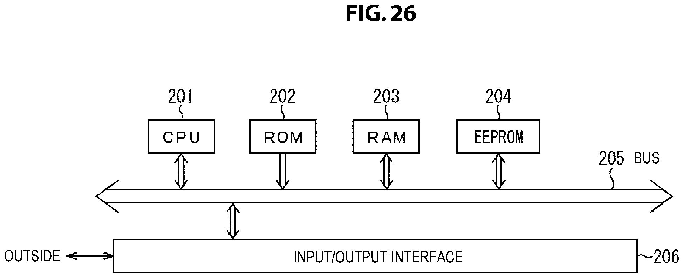

FIG. 26 is a block diagram illustrating a configuration example of an embodiment of a computer on which the programs executing the above-described series of processing are installed.

At the computer, a central processing unit (CPU) 201, a read only memory (ROM) 202, a random access memory (RAM) 203 and an electronically erasable and programmable read only memory (EEPROM) 204 are connected to each other with a bus 205. To the bus 205, an input/output interface 206 is further connected, and the input/output interface 206 is connected to the outside.

At the computer having the configuration as described above, the above-described series of processing is performed by the CPU 201 loading, for example, the programs stored in the ROM 202 and the EEPROM 204 to the RAM 203 via the bus 205 and executing the programs. Further, the programs to be executed by the computer (CPU 201) can be installed on the EEPROM 204 from the outside via the input/output interface 206 or can be updated as well as written in advance in the ROM 202.

By this means, the CPU 201 performs processing in accordance with the above-described flowchart or processing to be performed with the configuration of the above-described block diagram. The CPU 201 can then output the processing results to the outside, for example, via the input/output interface 206 as necessary.

Here, in this specification, the processing steps executed by a computer in accordance with a program do not always have to be executed in a time-sequential manner in the order described as the flowchart. That is, processing executed by the computer in accordance with the program includes processing in a parallel or discrete manner (for example, parallel processing or object-based processing).

Furthermore, with regard to the program, processing may be carried out by one computer (one processor), or processing may be carried out in a distributed manner by a plurality of computers. In addition, the program may be transferred to a remote computer and executed.

Further, in this specification, a system has the meaning of a set of a plurality of structural elements (such as an apparatus or a module (part)), and does not take into account whether or not all the structural elements are in the same casing. Therefore, the system may be either a plurality of apparatuses stored in separate casings and connected through a network, or an apparatus in which a plurality of modules is stored within a single casing.

Further, for example, an element described as a single device (or processing unit) may be divided and configured as a plurality of devices (or processing units). Conversely, elements described as a plurality of devices (or processing units) above may be configured collectively as a single device (or processing unit). Further, an element other than those described above may be added to the configuration of each device (or processing unit). Furthermore, a part of the configuration of a given device (or processing unit) may be included in the configuration of another device (or another processing unit) as long as the configuration or operation of the system as a whole is substantially the same.

In addition, for example, the present technology can adopt a configuration of cloud computing which performs processing by allocating and sharing one function by a plurality of devices through a network.

In addition, for example, the program described above can be executed in any device. In that case, it is sufficient if the device has a necessary function (functional block etc.) and can obtain necessary information.

In addition, for example, each step described by the above-described flowcharts can be executed by one device or executed by being allocated to a plurality of devices. Furthermore, in the case where a plurality of processes is included in one step, the plurality of processes included in this one step can be executed by one device or executed by being allocated to a plurality of devices. In other words, a plurality of processes included in one step can be executed as processing of a plurality of steps. Conversely, processing described as a plurality of steps can be executed collectively as one step.

Note that in a program executed by a computer, processing in steps describing the program may be executed chronologically along the order described in this specification, or may be executed concurrently, or individually at necessary timing such as when a call is made. In other words, unless a contradiction arises, processing in the steps may be executed in an order different from the order described above. Furthermore, processing in steps describing the program may be executed concurrently with processing of another program, or may be executed in combination with processing of another program.

Note that the plurality of present technologies described in this specification can be performed alone independently of each other, unless a contradiction arises. Of course, any plurality of the present technologies can be performed in combination. For example, part or the whole of the present technology described in any of the embodiments can be performed in combination with part or whole of the present technology described in another embodiment. In addition, part or the whole of any of the present technologies described above can be performed in combination with another technology that is not described above.

<Example of Application to mobile object>

The technology (present technology) according to an embodiment of the present disclosure is applicable to a variety of products. For example, the technology according to an embodiment of the present disclosure is implemented as devices mounted on any type of mobile objects such as automobiles, electric vehicles, hybrid electric vehicles, motorcycles, bicycles, personal mobilities, airplanes, drones, ships, and robots.

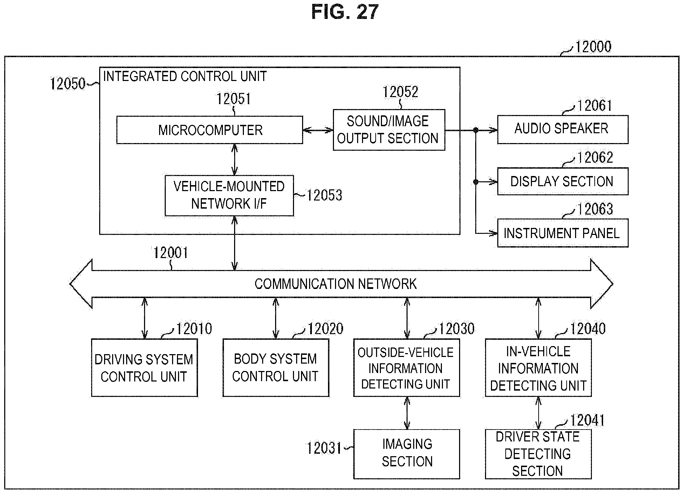

FIG. 27 is a block diagram depicting an example of schematic configuration of a vehicle control system as an example of a mobile body control system to which the technology according to an embodiment of the present disclosure can be applied.

The vehicle control system 12000 includes a plurality of electronic control units connected to each other via a communication network 12001. In the example depicted in FIG. 27, the vehicle control system 12000 includes a driving system control unit 12010, a body system control unit 12020, an outside-vehicle information detecting unit 12030, an in-vehicle information detecting unit 12040, and an integrated control unit 12050. In addition, a microcomputer 12051, a sound/image output section 12052, and a vehicle-mounted network interface (I/F) 12053 are illustrated as a functional configuration of the integrated control unit 12050.

The driving system control unit 12010 controls the operation of devices related to the driving system of the vehicle in accordance with various kinds of programs. For example, the driving system control unit 12010 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like.

The body system control unit 12020 controls the operation of various kinds of devices provided to a vehicle body in accordance with various kinds of programs. For example, the body system control unit 12020 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 12020. The body system control unit 12020 receives these input radio waves or signals, and controls a door lock device, the power window device, the lamps, or the like of the vehicle.

The outside-vehicle information detecting unit 12030 detects information about the outside of the vehicle including the vehicle control system 12000. For example, the outside-vehicle information detecting unit 12030 is connected with an imaging section 12031. The outside-vehicle information detecting unit 12030 makes the imaging section 12031 image an image of the outside of the vehicle, and receives the imaged image. On the basis of the received image, the outside-vehicle information detecting unit 12030 may perform processing of detecting an object such as a human, a vehicle, an obstacle, a sign, a character on a road surface, or the like, or processing of detecting a distance thereto.

The imaging section 12031 is an optical sensor that receives light, and which outputs an electric signal corresponding to a received light amount of the light. The imaging section 12031 can output the electric signal as an image, or can output the electric signal as information about a measured distance. In addition, the light received by the imaging section 12031 may be visible light, or may be invisible light such as infrared rays or the like.

The in-vehicle information detecting unit 12040 detects information about the inside of the vehicle. The in-vehicle information detecting unit 12040 is, for example, connected with a driver state detecting section 12041 that detects the state of a driver. The driver state detecting section 12041, for example, includes a camera that images the driver. On the basis of detection information input from the driver state detecting section 12041, the in-vehicle information detecting unit 12040 may calculate a degree of fatigue of the driver or a degree of concentration of the driver, or may determine whether the driver is dozing.

The microcomputer 12051 can calculate a control target value for the driving force generating device, the steering mechanism, or the braking device on the basis of the information about the inside or outside of the vehicle which information is obtained by the outside-vehicle information detecting unit 12030 or the in-vehicle information detecting unit 12040, and output a control command to the driving system control unit 12010. For example, the microcomputer 12051 can perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like.

In addition, the microcomputer 12051 can perform cooperative control intended for automatic driving, which makes the vehicle to travel autonomously without depending on the operation of the driver, or the like, by controlling the driving force generating device, the steering mechanism, the braking device, or the like on the basis of the information about the outside or inside of the vehicle which information is obtained by the outside-vehicle information detecting unit 12030 or the in-vehicle information detecting unit 12040.

In addition, the microcomputer 12051 can output a control command to the body system control unit 12020 on the basis of the information about the outside of the vehicle which information is obtained by the outside-vehicle information detecting unit 12030. For example, the microcomputer 12051 can perform cooperative control intended to prevent a glare by controlling the headlamp so as to change from a high beam to a low beam, for example, in accordance with the position of a preceding vehicle or an oncoming vehicle detected by the outside-vehicle information detecting unit 12030.

The sound/image output section 12052 transmits an output signal of at least one of a sound and an image to an output device capable of visually or auditorily notifying information to an occupant of the vehicle or the outside of the vehicle. In the example of FIG. 27, an audio speaker 12061, a display section 12062, and an instrument panel 12063 are illustrated as the output device. The display section 12062 may, for example, include at least one of an on-board display and a head-up display.

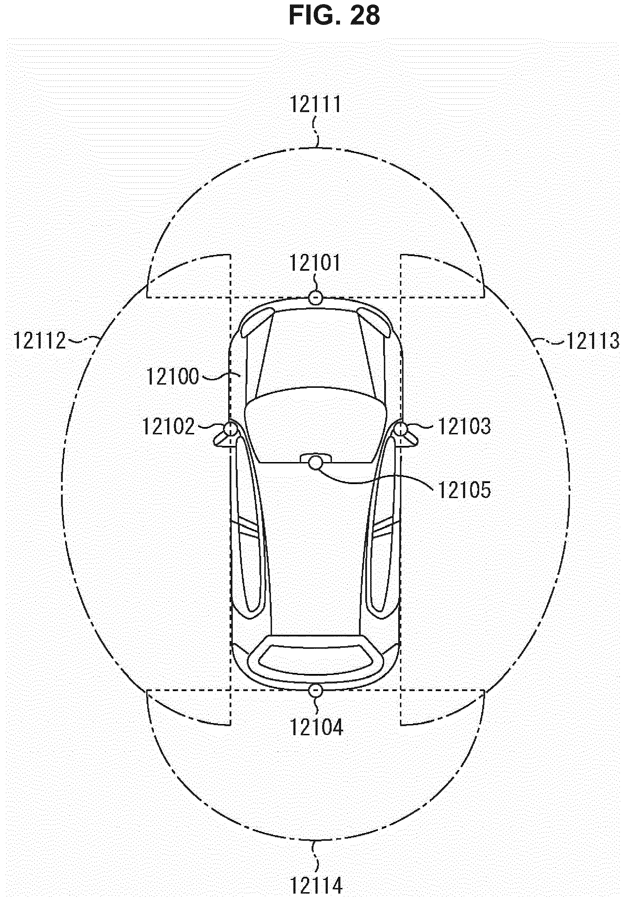

FIG. 28 is a diagram depicting an example of the installation position of the imaging section 12031.

In FIG. 28, the imaging section 12031 includes imaging sections 12101, 12102, 12103, 12104, and 12105.

The imaging sections 12101, 12102, 12103, 12104, and 12105 are, for example, disposed at positions on a front nose, sideview mirrors, a rear bumper, and a back door of the vehicle 12100 as well as a position on an upper portion of a windshield within the interior of the vehicle. The imaging section 12101 provided to the front nose and the imaging section 12105 provided to the upper portion of the windshield within the interior of the vehicle obtain mainly an image of the front of the vehicle 12100. The imaging sections 12102 and 12103 provided to the sideview mirrors obtain mainly an image of the sides of the vehicle 12100. The imaging section 12104 provided to the rear bumper or the back door obtains mainly an image of the rear of the vehicle 12100. The imaging section 12105 provided to the upper portion of the windshield within the interior of the vehicle is used mainly to detect a preceding vehicle, a pedestrian, an obstacle, a signal, a traffic sign, a lane, or the like.

Incidentally, FIG. 28 depicts an example of photographing ranges of the imaging sections 12101 to 12104. An imaging range 12111 represents the imaging range of the imaging section 12101 provided to the front nose. Imaging ranges 12112 and 12113 respectively represent the imaging ranges of the imaging sections 12102 and 12103 provided to the sideview mirrors. An imaging range 12114 represents the imaging range of the imaging section 12104 provided to the rear bumper or the back door. A bird's-eye image of the vehicle 12100 as viewed from above is obtained by superimposing image data imaged by the imaging sections 12101 to 12104, for example.

At least one of the imaging sections 12101 to 12104 may have a function of obtaining distance information. For example, at least one of the imaging sections 12101 to 12104 may be a stereo camera constituted of a plurality of imaging elements, or may be an imaging element having pixels for phase difference detection.

For example, the microcomputer 12051 can determine a distance to each three-dimensional object within the imaging ranges 12111 to 12114 and a temporal change in the distance (relative speed with respect to the vehicle 12100) on the basis of the distance information obtained from the imaging sections 12101 to 12104, and thereby extract, as a preceding vehicle, a nearest three-dimensional object in particular that is present on a traveling path of the vehicle 12100 and which travels in substantially the same direction as the vehicle 12100 at a predetermined speed (for example, equal to or more than 0 km/hour). Further, the microcomputer 12051 can set a following distance to be maintained in front of a preceding vehicle in advance, and perform automatic brake control (including following stop control), automatic acceleration control (including following start control), or the like. It is thus possible to perform cooperative control intended for automatic driving that makes the vehicle travel autonomously without depending on the operation of the driver or the like.

For example, the microcomputer 12051 can classify three-dimensional object data on three-dimensional objects into three-dimensional object data of a two-wheeled vehicle, a standard-sized vehicle, a large-sized vehicle, a pedestrian, a utility pole, and other three-dimensional objects on the basis of the distance information obtained from the imaging sections 12101 to 12104, extract the classified three-dimensional object data, and use the extracted three-dimensional object data for automatic avoidance of an obstacle. For example, the microcomputer 12051 identifies obstacles around the vehicle 12100 as obstacles that the driver of the vehicle 12100 can recognize visually and obstacles that are difficult for the driver of the vehicle 12100 to recognize visually. Then, the microcomputer 12051 determines a collision risk indicating a risk of collision with each obstacle. In a situation in which the collision risk is equal to or higher than a set value and there is thus a possibility of collision, the microcomputer 12051 outputs a warning to the driver via the audio speaker 12061 or the display section 12062, and performs forced deceleration or avoidance steering via the driving system control unit 12010. The microcomputer 12051 can thereby assist in driving to avoid collision.

At least one of the imaging sections 12101 to 12104 may be an infrared camera that detects infrared rays. The microcomputer 12051 can, for example, recognize a pedestrian by determining whether or not there is a pedestrian in imaged images of the imaging sections 12101 to 12104. Such recognition of a pedestrian is, for example, performed by a procedure of extracting characteristic points in the imaged images of the imaging sections 12101 to 12104 as infrared cameras and a procedure of determining whether or not it is the pedestrian by performing pattern matching processing on a series of characteristic points representing the contour of the object. When the microcomputer 12051 determines that there is a pedestrian in the imaged images of the imaging sections 12101 to 12104, and thus recognizes the pedestrian, the sound/image output section 12052 controls the display section 12062 so that a square contour line for emphasis is displayed so as to be superimposed on the recognized pedestrian. The sound/image output section 12052 may also control the display section 12062 so that an icon or the like representing the pedestrian is displayed at a desired position.

An example of the vehicle control system to which the technology according to the present disclosure can be applied has been described above. The technology according to the present disclosure can be applied to the in-vehicle information detecting unit 12040 among the above-described configuration. Specifically, it is possible to detect a state of a driver more accurately by utilizing distance measurement by the distance measurement module 11. Further, it is also possible to perform processing of recognizing gesture of a driver by utilizing distance measurement by the distance measurement module 11 and execute various kinds of operation in accordance with the gesture.

<Example of combination of configurations>

Additionally, the present technology may also be configured as below.

(1) A distance measurement processing apparatus including:

a correction parameter calculating section configured to calculate a correction parameter for correcting deviation of characteristics between a first tap and a second tap using a predetermined number of detection signals which are detected two each for two or more types of irradiated light, two or more types of the irradiated light with a predetermined phase difference being radiated on an object, and electric charges generated by reflected light reflected by the object being received being sorted into the first tap and the second tap in accordance with a distance to the object; and
a distance measuring section configured to obtain a depth indicating a distance to the object on the basis of the correction parameter and a predetermined number of the detection signals.

(2) The distance measurement processing apparatus according to (1),

in which, for a first detection period in which the reflected light of the irradiated light with a first phase is received, and a second detection period in which the reflected light of the irradiated light with a second phase is received, among two types of the irradiated light,
in the first detection period, a plurality of electric charges is alternately sorted into the first tap and the second tap, and a first detection signal in accordance with electric charges sorted and accumulated into the first tap and a second detection signal in accordance with electric charges sorted and accumulated into the second tap are detected, and
in the second detection period, a plurality of electric charges is alternately sorted into the first tap and the second tap, and a third detection signal in accordance with electric charges sorted and accumulated into the first tap and a fourth detection signal in accordance with electric charges sorted and accumulated into the second tap are detected.

(3) The distance measurement processing apparatus according to (2),
in which the correction parameter calculating section calculates two types of the correction parameter using the first detection signal, the second detection signal, the third detection signal and the fourth detection signal.
(4) The distance measurement processing apparatus according to (3),

in which the correction parameter calculating section includes
a calculating section configured to calculate two types of the correction parameter, and
a storage section configured to store one type of the correction parameter calculated by the calculating section.

(5) The distance measurement processing apparatus according to (4),
in which the calculating section calculates one type of the correction parameter to be stored in the storage section upon start of processing of obtaining the depth by the distance measuring section and stores the one type of the correction parameter in the storage section.
(6) The distance measurement processing apparatus according to (5),
in which the storage section holds the correction parameter for each pixel of a light receiving section which receives the reflected light.
(7) The distance measurement processing apparatus according to (5) or (6),
in which the calculating section obtains an offset parameter for correcting deviation of characteristics between the first tap and the second tap with an offset as the one type of the correction parameter to be stored in the storage section.
(8) The distance measurement processing apparatus according to (7),

in which the calculating section obtains the offset parameter using,
in addition to the first detection signal, the second detection signal, the third detection signal and the fourth detection signal,
a fifth detection signal in accordance with electric charges sorted and accumulated into the first tap and a sixth detection signal sorted and accumulated into the second tap, among a plurality of electric charges which is alternately sorted into the first tap and the second tap in a third detection period in which the reflected light of the irradiated light with a third phase is received, and
a seventh detection signal in accordance with electric charges sorted and accumulated into the first tap and an eighth detection signal sorted and accumulated into the second tap, among a plurality of electric charges which is alternately sorted into the first tap and the second tap in a fourth detection period in which the reflected light of the irradiated light with a fourth phase is received.

(9) The distance measurement processing apparatus according to any one of (5) to (8),
in which the calculating section obtains a gain parameter for correcting deviation of characteristics between the first tap and the second tap with a gain as the other type of the correction parameter.
(10) The distance measurement processing apparatus according to (9),
in which the calculating section obtains the gain parameter for each one frame of the depth output at a predetermined frame rate.
(11) The distance measurement processing apparatus according to any one of (2) to (10),

in which the distance measuring section includes
a correction operating section configured to perform operation of obtaining a first corrected detection signal by correcting the first detection signal and obtaining a second corrected detection signal by correcting the third detection signal, or operation of obtaining a third corrected detection signal by correcting the second detection signal and obtaining a fourth corrected detection signal by correcting the fourth detection signal, using the correction parameter calculated by the correction parameter calculating section, and
a distance measurement operating section configured to perform operation of obtaining the depth using the first detection signal, the third detection signal, the third corrected detection signal and the fourth corrected detection signal, or operation of obtaining the depth using the second detection signal, the fourth detection signal, the first corrected detection signal and the second corrected detection signal.

(12) The distance measurement processing apparatus according to any one of (1) to (11), further including:

a distance measurement result storage section configured to store the depth obtained by the distance measuring section; and
a result synthesizing section configured to synthesize the depth of a frame one frame before a current frame stored in the distance measurement result storage section and the depth of the current frame and output the synthesized depth.

(13) The distance measurement processing apparatus according to (12),

in which the distance measuring section obtains reliability for the depth along with the depth,
the reliability is stored along with the depth in the distance measurement result storage section, and
the result synthesizing section synthesizes the depth of the frame one frame before the current frame and the depth of the current frame by performing weighted addition in accordance with the reliability.

(14) A distance measurement module including:

a light emitting section configured to radiate two or more types of irradiated light with a predetermined phase difference to an object;
a light receiving section configured to output a predetermined number of detection signals which are detected two each for two or more types of the irradiated light, electric charges generated by reflected light reflected by the object being received being sorted into a first tap and a second tap in accordance with a distance to the object;
a correction parameter calculating section configured to calculate a correction parameter for correcting deviation of characteristics between the first tap and the second tap using a predetermined number of the detection signals; and
a distance measuring section configured to obtain a depth indicating a distance to the object on the basis of the correction parameter and a predetermined number of the detection signals.

(15) A distance measurement processing method to be performed by a distance measurement processing apparatus which performs distance measurement processing, the distance measurement processing method including:

calculating a correction parameter for correcting deviation of characteristics between a first tap and a second tap using a predetermined number of detection signals which are detected two each for two or more types of irradiated light, two or more types of the irradiated light with a predetermined phase difference being radiated on an object, and electric charges generated by reflected light reflected by the object being received being sorted into the first tap and the second tap in accordance with a distance to the object; and
obtaining a depth indicating a distance to the object on the basis of the correction parameter and a predetermined number of the detection signals.

(16) A program for causing a computer of a distance measurement processing apparatus which performs distance measurement processing to execute distance measurement processing including:

calculating a correction parameter for correcting deviation of characteristics between a first tap and a second tap using a predetermined number of detection signals which are detected two each for two or more types of irradiated light, two or more types of the irradiated light with a predetermined phase difference being radiated on an object, and electric charges generated by reflected light reflected by the object being received being sorted into the first tap and the second tap in accordance with a distance to the object; and
obtaining a depth indicating a distance to the object on the basis of the correction parameter and a predetermined number of the detection signals.

Note that the present embodiment is not limited to the above-described embodiment, and can be changed in various manners within the scope defined by the claims. Further, the effects described in this specification are merely illustrative or exemplified effects, and are not limitative, and the technology according to the present disclosure may achieve other effects.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A distance measurement processing apparatus comprising:

a correction parameter calculating section configured to calculate a correction parameter for correcting deviation of characteristics between a first tap and a second tap using a predetermined number of detection signals which are detected two each for two or more types of irradiated light, two or more types of the irradiated light with a predetermined phase difference being radiated on an object, and electric charges generated by reflected light reflected by the object being received being sorted into the first tap and the second tap in accordance with a distance to the object; and
a distance measuring section configured to obtain a depth indicating a distance to the object on a basis of the correction parameter and a predetermined number of the detection signals.

2. The distance measurement processing apparatus according to claim 1,

wherein, for a first detection period in which the reflected light of the irradiated light with a first phase is received, and a second detection period in which the reflected light of the irradiated light with a second phase is received, among two types of the irradiated light,
in the first detection period, a plurality of electric charges is alternately sorted into the first tap and the second tap, and a first detection signal in accordance with electric charges sorted and accumulated into the first tap and a second detection signal in accordance with electric charges sorted and accumulated into the second tap are detected, and

in the second detection period, a plurality of electric charges is alternately sorted into the first tap and the second tap, and a third detection signal in accordance with electric charges sorted and accumulated into the first tap and a fourth detection signal in accordance with electric charges sorted and accumulated into the second tap are detected.

3. The distance measurement processing apparatus according to claim 2,
wherein the correction parameter calculating section calculates two types of the correction parameter using the first detection signal, the second detection signal, the third detection signal and the fourth detection signal.

4. The distance measurement processing apparatus according to claim 3,

wherein the correction parameter calculating section includes
a calculating section configured to calculate two types of the correction parameter, and
a storage section configured to store one type of the correction parameter calculated by the calculating section.

5. The distance measurement processing apparatus according to claim 4,
wherein the calculating section calculates one type of the correction parameter to be stored in the storage section upon start of processing of obtaining the depth by the distance measuring section and stores the one type of the correction parameter in the storage section.

6. The distance measurement processing apparatus according to claim 5,
wherein the storage section holds the correction parameter for each pixel of a light receiving section which receives the reflected light.

7. The distance measurement processing apparatus according to claim 5,
wherein the calculating section obtains an offset parameter for correcting deviation of characteristics between the first tap and the second tap with an offset as the one type of the correction parameter to be stored in the storage section.

8. The distance measurement processing apparatus according to claim 7,

wherein the calculating section obtains the offset parameter using,
in addition to the first detection signal, the second detection signal, the third detection signal and the fourth detection signal,
a fifth detection signal in accordance with electric charges sorted and accumulated into the first tap and a sixth detection signal sorted and accumulated into the second tap, among a plurality of electric charges which is alternately sorted into the first tap and the second tap in a third detection period in which the reflected light of the irradiated light with a third phase is received, and
a seventh detection signal in accordance with electric charges sorted and accumulated into the first tap and an eighth detection signal sorted and accumulated into the second tap, among a plurality of electric charges which is alternately sorted into the first tap and the second tap in a fourth detection period in which the reflected light of the irradiated light with a fourth phase is received.

9. The distance measurement processing apparatus according to claim 5,
wherein the calculating section obtains a gain parameter for correcting deviation of characteristics between the first tap and the second tap with a gain as the other type of the correction parameter.

10. The distance measurement processing apparatus according to claim 2,

wherein the distance measuring section includes
a correction operating section configured to perform operation of obtaining a first corrected detection signal by correcting the first detection signal and obtaining a second corrected detection signal by correcting the third detection signal, or operation of obtaining a third corrected detection signal by correcting the second detection signal and obtaining a fourth corrected detection signal by correcting the fourth detection signal, using the correction parameter calculated by the correction parameter calculating section, and
a distance measurement operating section configured to perform operation of obtaining the depth using the first detection signal, the third detection signal, the third corrected detection signal and the fourth corrected detection signal, or operation of obtaining the depth using the second detection signal, the fourth detection signal, the first corrected detection signal and the second corrected detection signal.

11. The distance measurement processing apparatus according to claim 1, further comprising:

a distance measurement result storage section configured to store the depth obtained by the distance measuring section; and

a result synthesizing section configured to synthesize the depth of a frame one frame before a current frame stored in the distance measurement result storage section and the depth of the current frame and output the synthesized depth.

12. The distance measurement processing apparatus according to claim 11,

wherein the distance measuring section obtains reliability for the depth along with the depth,

the reliability is stored along with the depth in the distance measurement result storage section, and

the result synthesizing section synthesizes the depth of the frame one frame before the current frame and the depth of the current frame by performing weighted addition in accordance with the reliability.

13. A distance measurement module comprising:

a light emitting section configured to radiate two types of irradiated light with a predetermined phase difference to an object;

a light receiving section configured to output a predetermined number of detection signals which are detected two each for two types of the irradiated light, electric charges generated by reflected light reflected by the object being received being sorted into a first tap and a second tap in accordance with a distance to the object;

a correction parameter calculating section configured to calculate a correction parameter for correcting deviation of characteristics between the first tap and the second tap using a predetermined number of the detection signals; and

a distance measuring section configured to obtain a depth indicating a distance to the object on a basis of the correction parameter and a predetermined number of the detection signals.

14. A distance measurement processing method to be performed by a distance measurement processing apparatus which performs distance measurement processing, the distance measurement processing method comprising:

calculating a correction parameter for correcting deviation of characteristics between a first tap and a second tap using a predetermined number of detection signals which are detected two each for two types of irradiated light, two types of the irradiated light with a predetermined phase difference being radiated on an object, and electric charges generated by reflected light reflected by the object being received being sorted into the first tap and the second tap in accordance with a distance to the object; and

obtaining a depth indicating a distance to the object on a basis of the correction parameter and a predetermined number of the detection signals.

15. A program for causing a computer of a distance measurement processing apparatus which performs distance measurement processing to execute distance measurement processing comprising:

calculating a correction parameter for correcting deviation of characteristics between a first tap and a second tap using a predetermined number of detection signals which are detected two each for two types of irradiated light, two types of the irradiated light with a predetermined phase difference being radiated on an object, and electric charges generated by reflected light reflected by the object being received being sorted into the first tap and the second tap in accordance with a distance to the object; and

obtaining a depth indicating a distance to the object on a basis of the correction parameter and a predetermined number of the detection signals.

**FIG. 1**

# FIG. 2

**FIG. 3**

**FIG. 4**

**FIG. 5**

**FIG. 6**

**FIG. 7**

IRRADIATED LIGHT

$T_{RT}$

REFLECTED LIGHT

DIMIX_A

DIMIX_B

DETECTION SIGNAL A

A180

DETECTION SIGNAL B

B180

INTEGRATION

READOUT

Q2(PHASE DELAY 180°)

TIME

**FIG. 8**

IRRADIATED LIGHT

REFLECTED LIGHT

$T_{RT}$

DIMIX_A

DIMIX_B

DETECTION SIGNAL A

A270

DETECTION SIGNAL B

B270

INTEGRATION

READOUT

Q3(PHASE DELAY 270°)

TIME

**FIG. 9**

EP 3 572 834 A1

# FIG. 10

38

**FIG. 11**

## FIG. 12

15

DISTANCE MEASUREMENT OPERATION PROCESSING SECTION

52

DISTANCE MEASURING
SECTION

71                72

DETECTION
SIGNAL A(t)
DETECTION
SIGNAL B(t)

CORRECTION
OPERATING
SECTION

DISTANCE MEASUREMENT
OPERATING
SECTION

DEPTH d(t)
RELIABILITY c(t)

51

CORRECTION PARAMETER
CALCULATING SECTION

61

DEVIATION CORRECTION
PARAMETER
CALCULATING SECTION

GAIN
PARAMETER

DEVIATION CORRECTION
PARAMETER
STORAGE SECTION

OFFSET
PARAMETER

62

# FIG. 13

START

ACQUIRE TWO DETECTION SIGNALS WITH EACH OF TWO TYPES OF IRRADIATED LIGHT WITH DIFFERENT PHASE DELAYS — S11

HAVE OFFSET PARAMETERS BEEN STORED? — S12

NO ↓ YES

ARE TWO DETECTION SIGNALS ACQUIRED WITH EACH OF FOUR TYPES OF IRRADIATED LIGHT WITH DIFFERENT PHASE DELAYS? — S13

NO

YES

CALCULATE OFFSET PARAMETERS — S14

CALCULATE GAIN PARAMETER — S15

PERFORM CORRECTION OPERATION ON FOUR DETECTION SIGNALS TO ACQUIRE FOUR CORRECTED DETECTION SIGNALS — S16

CALCULATE DEPTH AND RELIABILITY USING FOUR DETECTION SIGNALS AND FOUR CORRECTED DETECTION SIGNALS — S17

CONTINUE DISTANCE MEASUREMENT? — S18

YES

NO

END

## FIG. 14

15A

**DISTANCE MEASUREMENT OPERATION PROCESSING SECTION**

52A

**DISTANCE MEASURING SECTION**

DETECTION
SIGNAL A(t)
DETECTION
SIGNAL B(t)

71
CORRECTION
OPERATING
SECTION

72
DISTANCE MEASUREMENT
OPERATING
SECTION

74
RESULT
SYNTHESIZING
SECTION

DEPTH d(t)
RELIABILITY c(t)

DISTANCE
MEASUREMENT RESULT
STORAGE SECTION

73

51
CORRECTION PARAMETER
CALCULATING SECTION

61
DEVIATION CORRECTION
PARAMETER
CALCULATING SECTION

GAIN
PARAMETER

DEVIATION CORRECTION
PARAMETER
STORAGE SECTION

OFFSET
PARAMETER

62

## FIG. 15

## FIG. 16

1 DEPTH FRAME

Q0 Q1 Q2 Q3

WAITING PERIOD

DEPTH FRAME

t        t+1        t+2        ...

# FIG. 17

START

ACQUIRE TWO DETECTION SIGNALS WITH EACH OF TWO TYPES OF IRRADIATED LIGHT WITH DIFFERENT PHASE DELAYS — S21

HAVE OFFSET PARAMETERS BEEN STORED? — S22

NO →

YES ↓

ARE TWO DETECTION SIGNALS ACQUIRED WITH EACH OF FOUR TYPES OF IRRADIATED LIGHT WITH DIFFERENT PHASE DELAYS? — S23

NO →

YES ↓

CALCULATE OFFSET PARAMETERS — S24

CALCULATE GAIN PARAMETER — S25

PERFORM CORRECTION OPERATION ON FOUR DETECTION SIGNALS TO ACQUIRE FOUR CORRECTED DETECTION SIGNALS — S26

CALCULATE DEPTH AND RELIABILITY USING FOUR DETECTION SIGNALS AND FOUR CORRECTED DETECTION SIGNALS — S27

ARE DISTANCE MEASUREMENT RESULTS STORED? — S28

NO →

YES ↓

OUTPUT SYNTHESIZED DISTANCE MEASUREMENT RESULT OBTAINED BY SYNTHESIZING DISTANCE MEASUREMENT RESULTS — S29

CONTINUE DISTANCE MEASUREMENT? — S30

YES →

NO ↓

END

**FIG. 18**

**FIG. 19**

**FIG. 20**

**FIG. 21**

: RESET

: INTEGRATION

: READOUT

: WAITING PERIOD

**FIG. 22**

15B

DISTANCE MEASUREMENT OPERATION PROCESSING SECTION

DETECTION
SIGNAL A
DETECTION
SIGNAL B

81
DETECTION
SIGNAL STORAGE
SECTION

82
MOTION
DETECTING
SECTION

M(t)=0

83
QUADRATURE-PHASE
DISTANCE MEASUREMENT
OPERATING SECTION

84
BIPHASE DISTANCE
MEASUREMENT
OPERATING SECTION

M(t)=1

86
RESULT
SYNTHESIZING
SECTION

DISTANCE
MEASUREMENT RESULT
STORAGE SECTION

85

DEPTH d(t)
RELIABILITY c(t)

## FIG. 23

# FIG. 24

```
                    ( START )
                       │
   ┌───────────────────┼─────────────────────────────────┐
   │                   ▼                                  │
   │    ┌──────────────────────────────────────┐  S41
   │    │ ACQUIRE TWO DETECTION SIGNALS WITH    │
   │    │ EACH OF TWO TYPES OF IRRADIATED       │
   │    │ LIGHT WITH DIFFERENT PHASE DELAYS     │
   │    └──────────────────────────────────────┘
   │                   │
   │  NO               ▼                          S42
   │◀────< HAVE DETECTION SIGNALS BEEN STORED? >
   │                   │ YES
   │                   ▼                          S43
   │     YES  < DOES MOVING SUBJECT APPEAR? >
   │      │            │ NO
   │      ▼ S45        ▼
   │  ┌──────────────┐  ┌──────────────────────┐ S44
   │  │ PERFORM      │  │ PERFORM QUADRATURE-  │
   │  │ BIPHASE      │  │ PHASE DISTANCE       │
   │  │ DISTANCE     │  │ MEASUREMENT          │
   │  │ MEASUREMENT  │  │ OPERATION PROCESSING │
   │  │ OPERATION    │  └──────────────────────┘
   │  │ PROCESSING   │           │
   │  └──────────────┘───────────▶
   │  NO                         ▼                S46
   │◀────< ARE DISTANCE MEASUREMENT RESULTS STORED? >
   │                   │ YES
   │                   ▼                          S47
   │    ┌──────────────────────────────────────┐
   │    │ OUTPUT SYNTHESIZED DISTANCE           │
   │    │ MEASUREMENT RESULT OBTAINED BY        │
   │    │ SYNTHESIZING DISTANCE MEASUREMENT     │
   │    │ RESULTS                               │
   │    └──────────────────────────────────────┘
   │   YES             ▼                          S48
   └────< CONTINUE DISTANCE MEASUREMENT? >
                       │ NO
                       ▼
                    ( END )
```

**FIG. 25**

## FIG. 26

FIG. 27

~12000

INTEGRATED CONTROL UNIT

12050

12051
MICROCOMPUTER

12052
SOUND/IMAGE
OUTPUT SECTION

~12061
AUDIO SPEAKER

~12062
DISPLAY SECTION

~12063
INSTRUMENT PANEL

VEHICLE-MOUNTED
NETWORK I/F ~12053

12001
COMMUNICATION NETWORK

~12010
DRIVING SYSTEM
CONTROL UNIT

~12020
BODY SYSTEM
CONTROL UNIT

~12030
OUTSIDE-VEHICLE
INFORMATION
DETECTING UNIT

~12040
IN-VEHICLE
INFORMATION
DETECTING UNIT

12031~ IMAGING
SECTION

~12041
DRIVER STATE
DETECTING
SECTION

# FIG. 28

Europäisches
Patentamt

European
Patent Office

Office européen
des brevets

# EUROPEAN SEARCH REPORT

**Application Number**

EP 19 17 1437

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/173184 A1 (OVSIANNIKOV ILIA [US] ET AL) 5 July 2012 (2012-07-05) * abstract; figures 1,3,8-12 * * paragraphs [0035] - [0040] * * paragraphs [0070] - [0074] * * paragraphs [0091] - [0093] * | 1-15 | INV. G01S7/486 G01S7/491 G01S17/10 G01S17/89 |
| X | MIRKO SCHMIDT ET AL: "High frame rate for 3D Time-of-Flight cameras by dynamic sensor calibration", COMPUTATIONAL PHOTOGRAPHY (ICCP), 2011 IEEE INTERNATIONAL CONFERENCE ON, IEEE, 8 April 2011 (2011-04-08), pages 1-8, XP031943266, DOI: 10.1109/ICCPHOT.2011.5753121 ISBN: 978-1-61284-707-8 * abstract; figures 2,3 * * pages 1-5, paragraph 1-6 * | 1-15 | |
| X | EP 1 659 418 A1 (IEE SARL [LU]) 24 May 2006 (2006-05-24) * paragraphs [0005] - [0013] * | 1-15 | TECHNICAL FIELDS SEARCHED (IPC) |
| A | KR 2014 0062720 A (SAMSUNG ELECTRONICS CO LTD [KR]) 26 May 2014 (2014-05-26) * abstract; figures 2-4,6,9-11 * * page 5, paragraph 24-25 * * page 9, paragraph 67-71 * | 1-15 | G01S |
| A | US 2018/059224 A1 (WANG YIBING MICHELLE [US] ET AL) 1 March 2018 (2018-03-01) * abstract; figures 6,7,8 * * page 8, paragraph 54-57 * * page 11, paragraph 68-71 * | 1-15 | |

The present search report has been drawn up for all claims

| Place of search | Date of completion of the search | Examiner |
|---|---|---|
| Munich | 15 October 2019 | Cordeiro, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 17 1437

15-10-2019

| Patent document cited in search report | | Publication date | Patent family member(s) | | Publication date |
|---|---|---|---|---|---|
| US 2012173184 | A1 | 05-07-2012 | KR 20120079646 A | | 13-07-2012 |
| | | | US 2012173184 A1 | | 05-07-2012 |
| EP 1659418 | A1 | 24-05-2006 | CN 101065683 A | | 31-10-2007 |
| | | | EP 1659418 A1 | | 24-05-2006 |
| | | | EP 1815268 A1 | | 08-08-2007 |
| | | | JP 4869246 B2 | | 08-02-2012 |
| | | | JP 2008520988 A | | 19-06-2008 |
| | | | US 2007299627 A1 | | 27-12-2007 |
| | | | WO 2006056530 A1 | | 01-06-2006 |
| KR 20140062720 | A | 26-05-2014 | NONE | | |
| US 2018059224 | A1 | 01-03-2018 | CN 108307180 A | | 20-07-2018 |
| | | | KR 20180023786 A | | 07-03-2018 |
| | | | US 2018059224 A1 | | 01-03-2018 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018087512 A

- JP 2017150893 A